# EUROPEAN PATENT APPLICATION

(11) **EP 4 518 491 A1**
(43) Date of publication of application: **05.03.2025**
(21) Application number: 23795306.2
(22) Date of filing: 24.04.2023
(51) Int. Cl.: H04W 72/04

(54) **BEAM INDICATION METHOD AND APPARATUS, DEVICE, AND STORAGE MEDIUM**

(30) Priority: 29.04.2022 CN 202210469111; 25.11.2022 CN 202211490939
(71) Applicant: Datang Mobile Communications Equipment Co., Ltd., Beijing 100085 (CN)
(72) Inventor: LI, Hui, Beijing 100085 (CN); GAO, Qiubin, Beijing 100085 (CN); HUANG, Qiuping, Beijing 100085 (CN); LUO, Yajuan, Beijing 100085 (CN); SONG, Lei, Beijing 100085 (CN)
(74) Representative: Studio Torta S.p.A.
(86) International application number: PCT/CN2023/090189
(87) International publication number: WO 2023/207873

(57) **Abstract**

The present disclosure provides a beam indication method and apparatus, a device and a storage medium. The method includes: acquiring transmission capability information of a terminal device UE; and transmitting a first message to the UE according to the transmission capability information, where the first message includes at least one piece of transmission configuration indication TCI state information, and the first message is indicative of performing transmission by the UE according to the TCI state information. In the present disclosure, a network device can give an indication of a transmission mode to be adopted by a UE to the UE through a first message, that is, adopting sTRP transmission or mTRP transmission, so that the network device can accurately instruct the UE to perform different TRP transmission processes according to different TRP scenarios, and can realize dynamic switching between sTRP transmission and mTRP transmission, thus contributing to ensuring the scheduling flexibility and system performance of the communication system.

## Description

This disclosure claims priority to Chinese Patent Application No. 202210469111.1 filed to China National Intellectual Property Administration on April 29, 2022 and entitled "BEAM INDICATION METHOD, APPARATUS, DEVICE AND STORAGE MEDIUM" and Chinese Patent Application No. 202211490939.1 filed to China National Intellectual Property Administration on November 25, 2022 and entitled "BEAM INDICATION METHOD, APPARATUS, DEVICE AND STORAGE MEDIUM", the entire contents of which are incorporated herein by reference.

### TECHNICAL FIELD

The present disclosure relates to the technical field of communication, and in particular, to a beam indication method and apparatus, a device and a storage medium.

### BACKGROUND

The NR Rel-17 protocol only supports a single transmission reception point TRP (sTRP) scenario. Beam indication signaling based on DCI format 1_1/1_2 is used for both data scheduling (PDSCH scheduling) and beam indication (TCI state indication). However, a beam indicated by this signaling cannot be used for a PDSCH scheduled by this signaling. For a scenario of handover between sTRP and multi-transmission reception point TRP (mTRP), a terminal device judges whether the currently scheduled PDSCH is sTRP or mTRP according to the number of beams indicated by a network device. Since the TCI state(s) indicated by DCI format 1_1/1_2 cannot be used for a PDSCH scheduled by this DCI, there will be a problem that the number of the TCI state(s) indicated by DCI does not match the PDSCH scheduled by this DCI with sTRP or mTRP transmission.

In addition, since the Rel-18 protocol introduces a scenario that a UE supports mTRP, while the Rel-17 protocol only supports the sTRP scenario, how to design the corresponding mode configuration scheme and beam indication scheme becomes a problem to be solved in order to support the mTRP scenario.

The above information disclosed in the background is only used to enhance the understanding of the background of the present disclosure, so it may include information that does not form the prior art known to those of ordinary skill in the art.

### SUMMARY

The present disclosure provides a beam indication method and apparatus, a device and a storage medium, which are used for solving the problem existing in the prior art.

In a first aspect, the present disclosure provides a beam indication method, which is applied to a network device and includes:
acquiring transmission capability information of the terminal;
sending a first message to the terminal according to the transmission capability information, where the first message includes at least one piece of transmission configuration indication TCI state information, and the first message is indicative of performing transmission by the terminal according to the TCI state information.

In some embodiments, the method further includes: transmitting TCI mode information corresponding to the TCI state information to the terminal, where the TCI mode information corresponding to the TCI state information is used to indicate that the TCI state information is applied to uplink transmission and/or downlink transmission, and the TCI mode information corresponding to the TCI state information is transmitted by being included in the first message or transmitted independently of the first message; where the TCI mode information includes a first TCI mode and/or a second TCI mode, and in the first TCI mode, the TCI state information used for uplink transmission is the same as the TCI state information used for downlink transmission; and in the second TCI mode, the TCI state information used for uplink transmission is different from the TCI state information used for downlink transmission.

In some embodiments, the TCI mode information corresponding to the TCI state information being transmitted independently of the first message includes: transmitting the TCI mode information corresponding to the TCI state information to the terminal by using one piece of signaling or using at least two pieces of signaling; where each of the at least two pieces of signaling is associated with a control resource set CORESET or a CORESET group, and the CORESET group includes CORESETs with a same identifier.

In some embodiments, the transmitting the TCI mode information corresponding to the TCI state information to the terminal by using one piece of signaling or at least two pieces of signaling includes: transmitting one second message or at least two second messages to the terminal; where the second message includes one or more TCI state fields and TCI mode information corresponding to each of the TCI state fields, or, the second message includes one or more TCI state fields, and each of the TCI state fields in the second message is preset to correspond to one kind of TCI mode information.

In some embodiments, the TCI mode information corresponding to the TCI state information being transmitted by being included in the first message includes: the first message includes a TCI mode information field, and the TCI mode information field is used to indicate the TCI mode information; or, the first message includes a TCI field, and some bits in the TCI field are used to indicate the TCI mode information.

In some embodiments, the first message being indicative of performing transmission by the terminal according to the TCI state information includes: the first message is indicative of performing single transmission reception point sTRP transmission or multi-transmission reception point mTRP transmission by the terminal according to the at least one piece of TCI state information, and the at least one piece of TCI state information is indicative of performing uplink transmission and/or downlink transmission.

In some embodiments, the first message being indicative of performing single transmission reception point sTRP transmission or multi-transmission reception point mTRP transmission by the terminal according to the at least one piece of TCI state information includes: when an amount of TCI state information used for uplink/downlink transmission out of the TCI state information included in the first message is one piece, the first message is indicative of performing sTRP transmission or mTRP transmission by the terminal according to TCI state information that takes effect after a previous indication, and performing a next sTRP transmission by the terminal according to the TCI state information in the first message after the TCI state information in the first message takes effect; or, when an amount of TCI state information used for uplink/downlink transmission out of the TCI state information included in the first message is at least two pieces, the first message is indicative of performing mTRP transmission by the terminal according to the TCI state information in the first message.

In some embodiments, the first message being indicative of performing sTRP transmission or mTRP transmission by the terminal according to TCI state information that takes effect after a previous indication includes: if an amount of TCI state information used for uplink/downlink transmission out of the TCI state information that takes effect after the previous indication is one piece, the first message is indicative of performing sTRP transmission by the terminal according to the TCI state information that takes effect after the previous indication; if an amount of TCI state information used for uplink/downlink transmission out of the TCI state information that takes effect after the previous indication is at least two pieces, the first message is indicative of performing mTRP transmission by the terminal according to the TCI state information that takes effect after the previous indication.

In some embodiments, the method further includes: transmitting TRP indication field information to the terminal, where the TRP indication field information is indicative of performing sTRP transmission or mTRP transmission, and the TRP indication field information is transmitted by being included in the first message or transmitted independently of the first message; where the first message is indicative of performing sTRP transmission or mTRP transmission by the terminal according to the TRP indication field information and the at least one piece of TCI state information.

In some embodiments, the first message being indicative of performing sTRP transmission or mTRP transmission by the terminal according to the TRP indication field information and the at least one piece of TCI state information includes: the first message is indicative of performing sTRP transmission or mTRP transmission by the terminal according to the TRP indication field information and TCI state information that takes effect after a previous indication, and performing a next sTRP transmission or a next mTRP transmission by the terminal according to the TCI state information in the first message after the TCI state information in the first message takes effect; or, the first message is indicative of performing sTRP transmission or mTRP transmission by the terminal according to the TRP indication field information and the at least one piece of TCI state information in the first message.

In some embodiments, the first message being indicative of performing sTRP transmission or mTRP transmission by the terminal according to the TRP indication field information and TCI state information that takes effect after a previous indication includes: when the TRP indication field information is indicative of performing mTRP transmission, and if an amount of TCI state information used for uplink/downlink transmission out of the TCI state information that takes effect after the previous indication is one piece, the first message is indicative of performing sTRP transmission by the terminal according to the TCI state information that takes effect after the previous indication; or, when the TRP indication field information is indicative of performing mTRP transmission, and if an amount of TCI state information used for uplink/downlink transmission out of the TCI state information that takes effect after the previous indication is at least two pieces, the first message is indicative of performing mTRP transmission by the terminal according to the TCI state information that takes effect after the previous indication; or, when the TRP indication field information is indicative of performing sTRP transmission, and if an amount of TCI state information used for uplink/downlink transmission out of the TCI state information that takes effect after the previous indication is one piece, the first message is indicative of performing sTRP transmission by the terminal according to the TCI state information that takes effect after the previous indication; or, when the TRP indication field information is indicative of performing sTRP transmission, and if an amount of TCI state information used for uplink/downlink transmission out of the TCI state information that takes effect after the previous indication is at least two pieces, the TRP indication field information is further indicative of selecting one of the at least two pieces of TCI state information used for uplink/downlink transmission as currently used target TCI state information by the terminal, and performing sTRP transmission by the terminal through the target TCI state information.

In some embodiments, the first message being indicative of performing sTRP transmission or mTRP transmission by the terminal according to the TRP indication field information and the at least one piece of TCI state information in the first message includes: when the TRP indication field information is indicative of performing mTRP transmission, the first message is indicative of performing mTRP transmission by the terminal according to the TCI state information in the first message; or, when the TRP indication field information is indicative of performing sTRP transmission, and if an amount of TCI state information used for uplink/downlink transmission out of the TCI state information included in the first message is one piece, the first message is indicative of performing sTRP transmission by the terminal according to the TCI state information in the first message; or, when the TRP indication field information is indicative of performing sTRP transmission, and if an amount of TCI state information used for uplink/downlink transmission out of the TCI state information included in the first message is at least two pieces, the TRP indication field information is further indicative of selecting one of the at least two pieces of TCI state information used for uplink/downlink transmission as currently used target TCI state information by the terminal, and performing sTRP transmission by the terminal through the target TCI state information.

In some embodiments, in a case that the first message is indicative of performing sTRP transmission or mTRP transmission by the terminal according to the TRP indication field information and the at least one piece of TCI state information in the first message, and if a time slot interval between a first time instant and a second time instant is less than or equal to a threshold value, the sTRP transmission or mTRP transmission indicated by the first message is performed according to one or more kinds of the following TCI state information: one or more pieces of TCI state information used by the network device to transmit the first message; one or more pieces of TCI state information in an effective state at the beginning of the sTRP transmission or mTRP transmission indicated by the first message; TCI state information corresponding to a predefined codepoint out of TCI state information whose activation is indicated by the network device; where the first time instant is a time instant when the terminal receives the first message, and the second time instant is a time instant when the terminal receives the sTRP transmission or the mTRP transmission indicated by the first message.

In some embodiments, an amount of the TRP indication field information is at least two pieces, and respective TRP indication field information corresponds to different channels and/or reference signals.

In some embodiments, the method further includes: receiving a confirmation message for the first message, where the confirmation message is transmitted by the terminal after receiving the first message, and the confirmation message is used to determine an effective time of the TCI state information indicated by the first message.

In some embodiments, the acquiring transmission capability information of the terminal includes: receiving a third message transmitted by the terminal, where the third message includes the transmission capability information.

In a second aspect, the present disclosure provides a beam indication method, which is applied to a terminal and includes:
receiving a first message from a network device, where the first message includes at least one piece of transmission configuration indication TCI state information, and the first message is transmitted by the network device according to transmission capacity information of the terminal; and
performing transmission according to the TCI state information.

In some embodiments, the method further includes: acquiring, from the first message, TCI mode information corresponding to the TCI state information, or receiving TCI mode information corresponding to the TCI state information and transmitted by the network device independently of the first message, where the TCI mode information corresponding to the TCI state information is used to indicate that the TCI state information is applied to uplink transmission and/or downlink transmission; where the TCI mode information includes a first TCI mode and/or a second TCI mode, and in the first TCI mode, the TCI state information used for uplink transmission is the same as the TCI state information used for downlink transmission; and in the second TCI mode, the TCI state information used for uplink transmission is different from the TCI state information used for downlink transmission.

In some embodiments, the receiving, from the network device, TCI mode information corresponding to the TCI state information includes: receiving the TCI mode information corresponding to the TCI state information and transmitted by the network device using one piece of signaling or using at least two pieces of signaling; where each of the at least two pieces of signaling is associated with a control resource set CORESET or a CORESET group, and the CORESET group includes CORESETs with a same identifier.

In some embodiments, the receiving the TCI mode information corresponding to the TCI state information and transmitted by the network device using one piece of signaling or using at least two pieces of signaling includes: receiving one second message or at least two second messages transmitted by the network device; where the second message includes one or more TCI state fields and TCI mode information corresponding to each of the TCI state fields, or, the second message includes one or more TCI state fields, and each of the TCI state fields in the second message is preset to correspond to one kind of TCI mode information.

In some embodiments, the first message includes a TCI mode information field, and the TCI mode information field is used to indicate the TCI mode information; or, the first message includes a TCI field, and some bits in the TCI field are used to indicate the TCI mode information.

In some embodiments, the performing transmission according to the TCI state information includes: performing, according to the at least one piece of TCI state information, single transmission reception point sTRP transmission or multi-transmission reception point mTRP transmission, where the at least one piece of TCI state information is indicative of performing uplink transmission and/or downlink transmission.

In some embodiments, the performing, according to the at least one piece of TCI state information, single transmission reception point sTRP transmission or multi-transmission reception point mTRP transmission includes: when an amount of TCI state information used for uplink/downlink transmission out of the TCI state information included in the first message is one piece, performing sTRP transmission or mTRP transmission according to TCI state information that takes effect after a previous indication, and performing a next sTRP transmission according to the TCI state information in the first message after the TCI state information in the first message takes effect; or, when an amount of TCI state information used for uplink/downlink transmission out of the TCI state information included in the first message is at least two pieces, performing mTRP transmission according to the TCI state information in the first message.

In some embodiments, the performing sTRP transmission or mTRP transmission according to TCI state information that takes effect after a previous indication includes: if an amount of TCI state information used for uplink/downlink transmission out of the TCI state information that takes effect after the previous indication is one piece, performing sTRP transmission according to the TCI state information that takes effect after the previous indication; if an amount of TCI state information used for uplink/downlink transmission out of the TCI state information that takes effect after the previous indication is at least two pieces, performing mTRP transmission according to the TCI state information that takes effect after the previous indication.

In some embodiments, the method further includes: acquiring TRP indication field information from the first message, or receiving TRP indication field information transmitted by the network device independently of the first message, where the TRP indication field information is indicative of performing sTRP transmission or mTRP transmission; and the performing transmission according to the TCI state information includes: performing sTRP transmission or mTRP transmission according to the TRP indication field information and the at least one piece of TCI state information.

In some embodiments, the performing sTRP transmission or mTRP transmission according to the TRP indication field information and the at least one piece of TCI state information includes: performing sTRP transmission or mTRP transmission according to the TRP indication field information and TCI state information that takes effect after a previous indication, and performing a next sTRP transmission or a next mTRP transmission according to the TCI state information in the first message after the TCI state information in the first message takes effect; or, performing sTRP transmission or mTRP transmission according to the TRP indication field information and the at least one piece of TCI state information in the first message.

In some embodiments, the performing sTRP transmission or mTRP transmission according to the TRP indication field information and TCI state information that takes effect after a previous indication includes: when the TRP indication field information is indicative of performing mTRP transmission, and if an amount of TCI state information used for uplink/downlink transmission out of the TCI state information that takes effect after the previous indication is one piece, performing sTRP transmission according to the TCI state information that takes effect after the previous indication; or, when the TRP indication field information is indicative of performing mTRP transmission, and if an amount of TCI state information used for uplink/downlink transmission out of the TCI state information that takes effect after the previous indication is at least two pieces, performing mTRP transmission according to the TCI state information that takes effect after the previous indication; or, when the TRP indication field information is indicative of performing sTRP transmission, and if an amount of TCI state information used for uplink/downlink transmission out of the TCI state information that takes effect after the previous indication is one piece, performing sTRP transmission according to the TCI state information that takes effect after the previous indication; or, when the TRP indication field information is indicative of performing sTRP transmission, and if an amount of TCI state information used for uplink/downlink transmission out of the TCI state information that takes effect after the previous indication is at least two pieces, selecting one of the at least two pieces of TCI state information used for uplink/downlink transmission as currently used target TCI state information, and performing sTRP transmission through the target TCI state information.

In some embodiments, the performing sTRP transmission or mTRP transmission according to the TRP indication field information and the at least one piece of TCI state information in the first message includes: when the TRP indication field information is indicative of performing mTRP transmission, performing mTRP transmission according to the TCI state information in the first message; or, when the TRP indication field information is indicative of performing sTRP transmission, and if an amount of TCI state information used for uplink/downlink transmission out of the TCI state information included in the first message is one piece, performing sTRP transmission according to the TCI state information in the first message; or, when the TRP indication field information is indicative of performing sTRP transmission, and if an amount of TCI state information used for uplink/downlink transmission out of the TCI state information included in the first message is at least two pieces, selecting one of the at least two pieces of TCI state information used for uplink/downlink transmission as currently used target TCI state information, and performing sTRP transmission through the target TCI state information.

In some embodiments, in a case that the first message is indicative of performing sTRP transmission or mTRP transmission by the terminal according to the TRP indication field information and the at least one piece of TCI state information in the first message, and if a time slot interval between a first time instant and a second time instant is less than or equal to a threshold value, the sTRP transmission or mTRP transmission indicated by the first message is performed according to one or more kinds of the following TCI state information: one or more pieces of TCI state information used by the network device to transmit the first message; one or more pieces of TCI state information in an effective state at the beginning of the sTRP transmission or mTRP transmission indicated by the first message; TCI state information corresponding to a predefined codepoint out of TCI state information whose activation is indicated by the network device; where the first time instant is a time instant when the terminal receives the first message, and the second time instant is a time instant when the terminal receives the sTRP transmission or the mTRP transmission indicated by the first message.

In some embodiments, an amount of the TRP indication field information is at least two pieces, and respective TRP indication field information corresponds to different channels and/or reference signals.

In some embodiments, the method further includes: transmitting, after receiving the first message, a confirmation message for the first message to the network device, where the confirmation message is used to determine an effective time of the TCI state information indicated by the first message.

In some embodiments, the method further includes: transmitting a third message to the network device, where the third message includes transmission capability information of the terminal.

In a third aspect, the present disclosure provides a beam indication apparatus, which is applied to a network device and includes:
an acquiring module, configured to acquire transmission capability information of a terminal; and
a transmitting module, configured to transmit a first message to the terminal according to the transmission capability information, where the first message includes at least one piece of transmission configuration indication TCI state information, and the first message is indicative of performing transmission by the terminal according to the TCI state information.

In a fourth aspect, the present disclosure provides a beam indication apparatus, which is applied to a terminal and includes:
a receiving module, configured to receive a first message from a network device, where the first message includes at least one piece of transmission configuration indication TCI state information, and the first message is transmitted by the network device according to transmission capacity information of the terminal; and
a transmitting module, configured to perform transmission according to the TCI state information.

In a fifth aspect, the present disclosure provides a network device, which includes a memory, a transceiver and a processor;
the memory is configured to store a computer program, the transceiver is configured to transmit and receive data under control of the processor, and the processor is configured to read the computer program in the memory and perform the following operations:
acquiring transmission capability information of a terminal; and
transmitting a first message to the terminal according to the transmission capability information, where the first message includes at least one piece of transmission configuration indication TCI state information, and the first message is indicative of performing transmission by the terminal according to the TCI state information.

In a sixth aspect, the present disclosure provides a terminal, which includes a memory, a transceiver and a processor;
the memory is configured to store a computer program, the transceiver is configured to transmit and receive data under control of the processor, and the processor is configured to read the computer program in the memory and perform the following operations:
receiving a first message from a network device, where the first message includes at least one piece of transmission configuration indication TCI state information, and the first message is transmitted by the network device according to transmission capability information of the terminal; and
performing transmission according to the TCI state information.

In a seventh aspect, the present disclosure provides a computer-readable storage medium, where the computer-readable storage medium has computer-executable instructions stored thereon, and the computer-executable instructions, when executed by a processor, are used to implement the beam indication method described above.

The present disclosure provides a beam indication method and apparatus, a device and storage medium, where the method includes: acquiring transmission capability information of a terminal; transmitting a first message to the terminal according to the transmission capability information, where the first message includes at least one piece of transmission configuration indication TCI state information, and the first message is indicative of performing transmission by the terminal according to the TCI state information. In the present disclosure, a network device can give an indication of a transmission mode to be adopted by a terminal to the terminal through a first message, that is, adopting sTRP transmission or mTRP transmission, so that the network device can accurately instruct the terminal to perform different TRP transmission processes according to different TRP scenarios, and can realize dynamic switching between sTRP transmission and mTRP transmission, thus contributing to ensuring the scheduling flexibility and system performance of the communication system.

### BRIEF DESCRIPTION OF THE DRAWINGS

The accompanying drawings, which are incorporated in and constitute a part of this specification, illustrate embodiments consistent with the disclosure and together with the description, serve to explain the principles of the disclosure.
FIG. 1 is a schematic diagram of signaling in the prior art.
FIG. 2 is a schematic diagram of a beam indication method provided by an embodiment of the present disclosure.
FIG. 3 is a schematic diagram of a beam indicating apparatus provided by an embodiment of the present disclosure.
FIG. 4 is a schematic diagram of a beam indicating apparatus provided by an embodiment of the present disclosure.
FIG. 5 is a schematic structural diagram of a network device provided by an embodiment of the present disclosure.
FIG. 6 is a schematic structural diagram of a terminal provided by an embodiment of the present disclosure.

Through the above drawings, clear embodiments of the present disclosure have been shown, which will be described in more detail later. These drawings and written descriptions are not intended to limit the scope of concepts of the present disclosure in any way, but to explain the concepts of the present disclosure to those skilled in the art by referring to specific embodiments.

### DESCRIPTION OF EMBODIMENTS

In order to make the objectives, technical solutions, and advantages of the embodiments of the present invention more clear, the technical solutions in the embodiments of the present invention will be clearly and completely described in the following with reference to the accompanying drawings of the embodiments of the present invention. It is obvious that the described embodiments are only part of embodiments of the present invention, but not all embodiments. All other embodiments obtained by those skilled in the art based on the embodiments of the present invention without creative efforts are within the scope of the present invention.

The terminology used in the embodiments of the present disclosure is for the purpose of describing specific embodiments only and is not intended to limit the invention. The singular forms "a" and "the" used in the embodiments of the present disclosure are also intended to include the plural forms, unless the context clearly indicates other meaning.

It should be understood that the term "and/or" used herein is only a description of the relationship between related objects, which means that there may be three kinds of relationships, for example, A and/or B, which may mean that A exists alone, A and B exist at the same time, and B exists alone. In addition, the character "/" herein generally indicates that there is an OR relationship between context objects.

Depending on the context, the words "if" and "in case" as used herein may be interpreted as "when" or "while" or "in response to determination" or "in response to detection". Similarly, depending on the context, the phrases "if determined" or "if detected (stated condition or event)" may be interpreted as "when determined" or "in response to determination" or "when detected (stated condition or event)" or "in response to detection (stated condition or event)".

It should also be noted that the terms "comprising", "including" or any other variation thereof are intended to cover non-exclusive inclusion, so that a commodity or system including a series of elements includes not only those elements, but also other elements not explicitly listed, or elements inherent to such commodity or system. Without more restrictions, an element defined by the phrase "including one" does not exclude the existence of other identical elements in the commodity or system that includes the element.

In a new radio (new radio, NR) system, a downlink channel includes a downlink data channel (physical downlink shared channel, PDSCH) and a downlink control channel (physical downlink control channel, PDCCH), an uplink channel includes an uplink data channel (physical uplink shared channel, PUSCH) and an uplink control channel (physical uplink control channel, PUCCH). For high frequency transmission (FR2 frequency band in NR), due to the limited transmission range, the uplink and downlink channels are usually transmitted after beamforming to enhance coverage. The beam formed direction may be determined by beam scanning of uplink and downlink reference signals. For example, a channel state information measurement reference signal (channel state information reference signal, CSI-RS) or a sounding reference signal (sounding reference signal, SRS) with different directions are used for beam scanning, and the direction of the reference signal with better beam quality is selected for uplink or downlink transmission. The beam directions of different channels are determined, and signaling is needed to indicate the beam during channel transmission, that is, beam indication. In the NR Rel-15/16 protocol, for PUCCH channel, a network device semi-statically configures multiple beam directions to a terminal device through high-layer signaling SpatialRelationInfo, and activates one of them through media access control-control element (media access control-control element, MAC-CE). For PUSCH, the uplink beam selected by the network device is indirectly indicated by SpatialRelationInfo of an SRS resource indicated by send routing information (Map_Send_Routing_Information, SRI) field in dynamic signaling downlink control information (downlink control information, DCI). For PDCCH channel, the network device configures multiple TCI states (TCI state information) for each control resource set CORESET through high-layer signaling, and activates one of them through MAC-CE indication. For PDSCH channel, the network device indicates one piece of TCI state information through the TCI field in DCI signaling, indicating the beam direction of the channel.

Different channels use different beam indication signaling, and each channel performs beam indication independently. In this way, different channels may use different beams for transmission. An important scenario in practical application is that multiple channels use a same beam direction. For example, a PDCCH for resource scheduling and a PDSCH for transmitting user data use a same beam direction for transmission, and an uplink control channel PUCCH and an uplink data channel PUSCH may also use a same beam direction. When beam reciprocity exists, uplink and downlink channels may also use a same beam direction. At this time, the current independent beam indication method increases the complexity of the system and the overhead of signaling indication.

In order to overcome the above problems, the NR Rel-17 protocol introduces a method of indicating multiple channel beams with one piece of beam indication signaling, which activates a set of TCI state information through a MAC-CE, and then indicates one of the activated TCI state information through DCI. When uplink and downlink channels are reciprocal, a beam indicated by beam indication signaling can be used for both uplink and downlink channels, and at this time it is configured as a joint TCI mode (joint TCI mode). When the MPE problem occurs due to human body occlusion or a terminal device needs to switch the uplink beam, the uplink channel will use a beam different from the downlink channel, so the beam indication signaling needs to indicate a beam for the uplink channel and a beam for the downlink channel respectively, and at this time it is configured as an independent uplink and downlink TCI mode (separate DL/UL TCI mode).

The NR Rel-17 protocol only supports the single transmission reception point TRP (sTRP) scenario. Beam indication signaling based on DCI format 1_1/1_2 is used for both data scheduling (PDSCH scheduling) and beam indication (TCI state indication). However, a beam indicated by this signaling cannot be used for a PDSCH scheduled by this signaling. For a scenario of handover between sTRP and multi-transmission reception point TRP (mTRP), a terminal device judges whether the currently scheduled PDSCH is sTRP or mTRP according to the number of beams indicated by a network device. Since a TCI state indicated by DCI format 1_1/1_2 cannot be used for a PDSCH scheduled by this DCI, there will be a problem that the number of the TCI state indicated by DCI does not match the PDSCH scheduled by this DCI with sTRP or mTRP transmission.

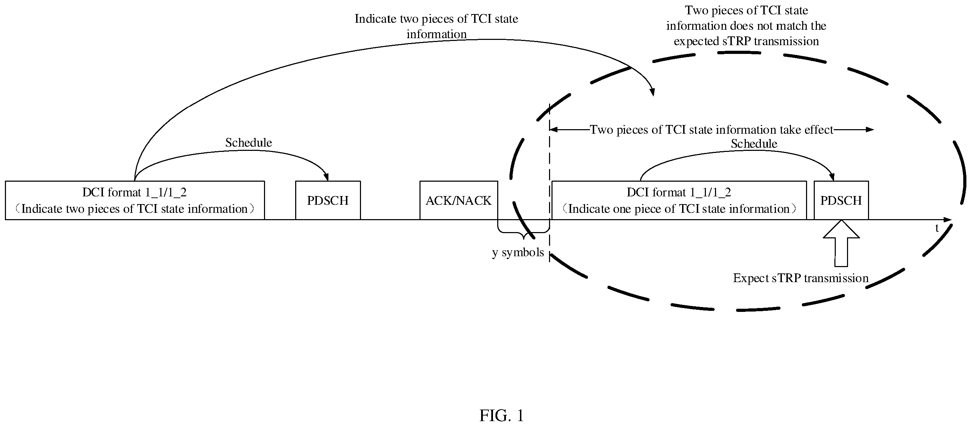

For example, FIG. 1 is a schematic diagram of signaling in the prior art. As shown in FIG. 1, two pieces of TCI state information indicated by the first DCI need to take effect after ACK/NACK. The second DCI is expected to indicate sTRP transmission, but the two pieces of TCI state information took effect after the previous indication. This mismatch will cause the network device to fail to update the transmission mode of the target PDSCH in time, resulting in a large delay and increasing the complexity of the network device.

In addition, since the Rel-18 protocol introduces the scenario that the terminal supports mTRP, while the Rel-17 protocol only supports the sTRP scenario, how to design the corresponding mode configuration scheme and beam indication scheme becomes a problem to be solved in order to support the mTRP scenario.

The technical solutions provided by the present disclosure aim to solve the above technical problems in the prior art.

The present invention provides a beam indication method, where a network device may give an indication of transmission modes of different TRP scenarios to a terminal through static or dynamic mode indication information and beam indication information, thereby realizing TRP-level mode indication in multiple TRP scenarios. Through the solutions of the present disclosure, it can be flexibly realized that different TRPs use different transmission modes, and scheduling flexibility and system performance are ensured.

It can be understood that the processing steps of the beam indication method in the present disclosure can be realized by a terminal or a network device.

The network device may be a base station, specifically may be a base station (base transceiver station, BTS) and/or a base station controller in global mobile communication (global system of mobile communication, GSM for short) or code division multiple access (code division multiple access, CDMA for short), may also be a base station (NodeB, NB) and/or a radio network controller (radio network controller, RNC) in wideband code division multiple access (wideband code division multiple access, WCDMA), may also be an evolutional base station (evolutional Node B, eNB or eNodeB for short) in long term evolution (long term evolution, LTE for short), or a relay station or an access point, or a base station (gNB) in a 5G network, a base station in a future 6G network, etc., which is not limited in the embodiments of the present disclosure.

The terminal may be a wireless terminal or a wired terminal. The wireless terminal may refer to a device that provides voice and/or other business data connectivity to a user, a handheld device with wireless connection function, or other processing devices connected to a wireless modem. The wireless terminal may communicate with one or more core network devices via a radio access network (radio access network, RAN for short). The wireless terminal may be a mobile terminal, such as a mobile phone (or referred to as a "cellular" phone) and a computer with a mobile terminal, such as a portable, pocket-sized, handheld, computer-built or vehicle-mounted mobile device, which exchanges language and/or data with the radio access network. For another example, the wireless terminal may also be a personal communication service (personal communication service, PCS for short) phone, a cordless phone, a session initiation protocol (session initiation protocol, SIP for short) phone, a wireless local loop (wireless local loop, WLL for short) station, a personal digital assistant (personal digital assistant, PDA for short) and other devices. The wireless terminal may also be referred to as a system, a subscriber unit (subscriber unit), a subscriber station (subscriber station), a mobile station (mobile station), a mobile platform (mobile), a remote station (remote station), a remote terminal (remote terminal), an access terminal (access terminal), a user terminal (user terminal), a user agent (user agent), a user device (user device or user equipment), which are not limited here. Optionally, the terminal may also be a smart watch, a tablet computer and other devices.

The technical solutions of the present disclosure and how the technical solutions of the present disclosure can solve the above technical problem will be described in detail with specific embodiments. The following specific embodiments may be combined with each other, and the same or similar concepts or processes may not be repeated in some embodiments. Embodiments of the present disclosure will be described below with reference to the accompanying drawings.

In some embodiments, a beam indication method is provided.

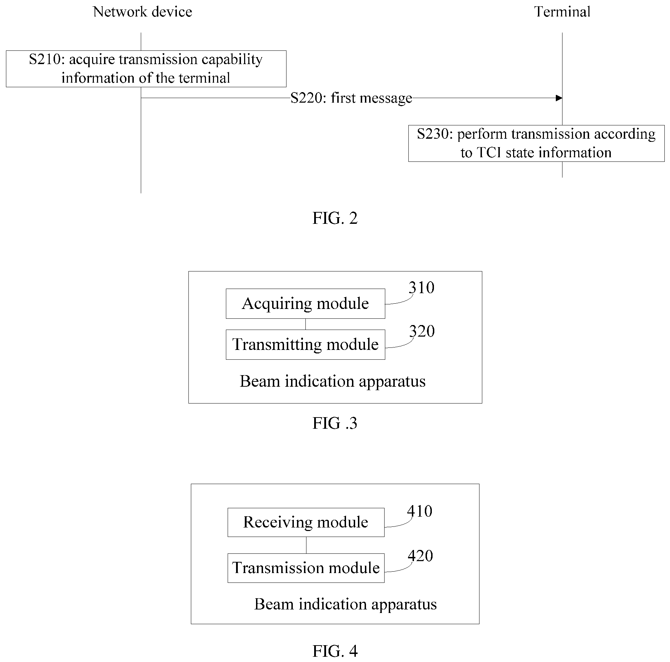

FIG. 2 is a schematic diagram of a beam indication method provided by an embodiment of the present disclosure. As shown in FIG. 2, the method mainly includes the following steps.

S210: a network device acquires transmission capability information of a terminal.

The transmission capability information may refer to TRP transmission capability information supported by the terminal, such as whether the terminal supports mTRP common beam transmission.

Optionally, the network device may directly acquire capability information of the terminal supporting corresponding mTRP transmission. Or, the network device may acquire a standard version supported by the terminal, so as to determine whether the terminal supports mTRP transmission. For example, if determining that the terminal belongs to a terminal with standard version rel-18, the network device determines that the terminal supports mTRP transmission.

Optionally, the terminal may communicate with the network device and transmit the transmission capability information of the terminal itself to the network device. For example, the terminal may transmit a third message containing its own transmission capability information to the network device. After receiving the third message transmitted by the terminal, the network device directly determines, according to the third message, that the terminal can support mTRP common beam transmission, or determines that the terminal belongs to a terminal supporting rel-18, thereby further determining that the terminal can support mTRP common beam transmission.

Optionally, the network device may also acquire the transmission capability information of the terminal by other means. For example, after acquiring relevant identification information of the terminal, the network device queries according to the identification information, so as to acquire the transmission capability information of the terminal.

S220: the network device transmits a first message to the terminal according to the transmission capability information, where the first message includes at least one piece of transmission configuration indication TCI state information, and the first message is indicative of performing transmission by the terminal according to the TCI state information. Accordingly, the terminal receives the first message from the network device.

The network device may transmit at least one piece of TCI state information to the terminal through the first message, thereby instructing the terminal to perform transmission according to the at least one piece of TCI state information.

Optionally, the first message may specifically be a downlink control information (downlink control information, DCI) message.

S230: the terminal performs transmission according to the TCI state information.

After receiving the first message from the network device, the terminal performs transmission according to the TCI state information indicated by the first message, and the transmission mode includes sTRP transmission or mTRP transmission.

For example, if the first message contains one piece of TCI state information, the terminal may perform sTRP transmission according to the indication of the first message. If the first message contains two pieces of TCI state information, the terminal may perform sTRP transmission or mTRP transmission according to the indication of the first message. If the first message contains three pieces of TCI state information, the terminal may perform mTRP transmission according to the indication of the first message. If the first message contains four pieces of TCI state information, the terminal may perform mTRP transmission according to the indication of the first message.

Therefore, based on the technical solution provided in this embodiment, a network device can give an indication of a transmission mode to be adopted by a terminal to the terminal through a first message, that is, adopting sTRP transmission or mTRP transmission, so that the network device can accurately instruct the terminal to perform different TRP transmission processes according to different TRP scenarios, and can realize dynamic switching between sTRP transmission and mTRP transmission, thus contributing to ensuring the scheduling flexibility and system performance of the communication system.

In some embodiments, the method further includes: the network device transmitting TCI mode information corresponding to the TCI state information to the terminal, where the TCI mode information corresponding to the TCI state information is used to indicate that the TCI state information is applied to uplink transmission and/or downlink transmission, and the TCI mode information corresponding to the TCI state information is transmitted by being included in the first message or transmitted independently of the first message. Accordingly, the terminal receives the TCI mode information corresponding to the TCI state information from the network device, and performs transmission according to the TCI mode information.

Optionally, the TCI mode information corresponding to the TCI state information may be transmitted by being included in the first message. For example, when the first message is a DCI message, the network device transmits the TCI mode information to the terminal through the DCI message.

Optionally, the TCI mode information corresponding to the TCI state information may also be transmitted independently of the first message. For example, the network device transmits the TCI mode information to the terminal through a MAC-CE.

Optionally, the TCI mode information includes a first TCI mode and/or a second TCI mode. The first TCI mode may be, for example, a joint TCI mode. In the first TCI mode, the TCI state information used for uplink transmission is the same as the TCI state information used for downlink transmission, that is, one piece of TCI state information may be used for uplink transmission and downlink transmission of the same TRP. The second TCI mode may be, for example, an independent uplink and downlink TCI mode (referred to as independent TCI mode for short). In the second TCI mode, the TCI state information used for uplink transmission is different from the TCI state information used for downlink transmission, that is, one piece of TCI state information is only used for uplink transmission of one TRP or only for downlink transmission of one TRP.

Next, the case where TCI mode information corresponding to TCI state information is transmitted independently of the first message will be explained.

In some embodiments, the TCI mode information corresponding to the TCI state information being transmitted independently of the first message includes: the network device transmitting the TCI mode information corresponding to the TCI state information to the terminal by using at least two pieces of signaling, where each of the at least two pieces of signaling is associated with a control resource set CORESET or a CORESET group, and the CORESET group includes CORESETs with the same identifier.

Optionally, the network device transmitting the TCI mode information corresponding to the TCI state information to the terminal by using at least two pieces of signaling includes: the network device transmitting at least two second messages to the terminal, where the second message includes one or more TCI state fields and TCI mode information corresponding to each of the TCI state fields, or the second message includes one or more TCI state fields, and each of the TCI state fields in the second message is preset to correspond to one kind of TCI mode information.

Specifically, through the first message, the network device configures the terminal with two CORESETPoolIndex, which are denoted as CORESETPoolIndex0 and CORESETPoolIndex1. The configuration corresponds to that the terminal and the network device can use mTRP (such as TRP0 and TRP1) for transmission, and each TRP corresponds to one CORESETPoolIndex.

It is assumed that CORESETPoolIndex0 configured by the network device includes CORESET#0, CORESET#1 and CORESET#2, and CORESETPoolIndex1 configured by the network device includes CORESET#3 and CORESET#4. Accordingly, the PDCCH configured in CORESET#0, CORESET#1 and CORESET#2 and its scheduled PDSCH will be transmitted using TRP0, and the PDCCH configured in CORESET#3 and CORESET#4 and its scheduled PDSCH will be transmitted using TRP1.

In addition, the network device configures a corresponding beam indication mode for CORESETPoolIndex. For example, the network device configures the joint TCI mode for CORESETPoolIndex0 and the independent TCI mode for CORESETPoolIndex1. The configuration may be configuring an association relationship between each CORESETPoolIndex and the beam indication mode, and may also be configuring each CORESET's CORESETPoolIndex and its corresponding beam indication mode under the configuration of each CORESET.

Therefore, based on the above configuration, TRP0 corresponding to CORESETPoolIndex0 adopts the joint TCI mode, that is, the network device instructs the terminal to use one piece of TCI state information (for example, any one of CORESET#0, CORESET#1 and CORESET#2) for uplink and downlink transmission.

In addition, the TRP1 corresponding to CORESETPoolIndex1 adopts an independent TCI mode, that is, the network device instructs the terminal to use one piece of TCI state information (such as any one of CORESET#3 and CORESET#4) for uplink or downlink transmission, or instructs the terminal to use two pieces of TCI state information (such as CORESET#3 and CORESET#4) for uplink and downlink transmission respectively.

In some embodiments, the TCI mode information corresponding to the TCI state information being transmitted independently of the first message includes: the network device transmitting the TCI mode information corresponding to the TCI state information to the terminal by using one piece of signaling.

Optionally, the network device transmitting the TCI mode information corresponding to the TCI state information to the terminal by using one piece of signaling includes: the network device transmitting a second message to the terminal, where the second message includes one or more TCI state fields and TCI mode information corresponding to each of the TCI state fields, or the second message includes one or more TCI state fields, and each of the TCI state fields in the second message is preset to correspond to one kind of TCI mode information.

Optionally, the second message may specifically be MAC-CE signaling.

Specifically, the network device may configure a joint TCI mode, an independent TCI mode or a hybrid (i.e. joint TCI+ independent TCI) mode for the terminal through RRC signaling.
(1) If RRC is configured for the joint TCI mode, the codepoint (codepoint) of the TCI field in the beam indication signaling DCI format 1_1/1_2 (i.e. the first message) may correspond to one piece of TCI state information or two pieces of TCI state information. If it corresponds to one piece of TCI state information, it means that the network device instructs the terminal to perform sTRP transmission, and if it corresponds to two pieces of TCI state information, it means that the network device instructs the terminal to perform mTRP transmission. Therefore, the terminal can determine whether to perform sTRP transmission or mTRP transmission according to the amount of the TCI state information.
(2) If RRC is configured for the independent TCI mode, the codepoint of the TCI field may correspond to one to four pieces of TCI state information. For the sTRP scenario, one piece of TCI state information (corresponding to independent uplink transmission or independent downlink transmission of one TRP) or two pieces of TCI state information (corresponding to independent uplink transmission and independent downlink transmission of the same TRP respectively) may be indicated. For the mTRP scenario, two pieces of TCI state information (corresponding to independent uplink transmission or independent downlink transmission of two TRPs respectively), three pieces of TCI state information (corresponding to independent uplink transmission or independent downlink transmission of one TRP and independent uplink transmission and independent downlink transmission of another TRP respectively) or four pieces of TCI state information (corresponding to independent uplink transmission and independent downlink transmission of two TRPs respectively) may be indicated. In order to distinguish the TCI state information corresponding to each TRP when 2/3 pieces of TCI state information are indicated, one way is to reserve four TCI state fields in the MAC-CE signaling that activates TCI state information, and the system predefines the first two TCI state fields as a group, which respectively represent an independent uplink TCI state and an independent downlink TCI state of one TRP, and the system predefines the last two TCI state fields as a group, which respectively represent the independent uplink TCI state and the independent downlink TCI state of another TRP. Table 1 below gives the TCI state information corresponding to a codepoint:

**Table 1**

| TCI state field -1 (independent uplink TCI) | TCI state field -2 (independent downlink TCI) | TCI state field -3 (independent uplink TCI) | TCI state field -4 (independent downlink TCI) |
|---|---|---|---|
| TCI_state1 | NULL | TCI_state12 | TCI_state8 |

NULL represents that the TCI state field is empty, that is, it does not indicate TCI state information. If receiving this codepoint indicated by DCI format 1_1/1_2, the terminal uses an uplink beam corresponding to TCI_state1 to transmit information to one TRP, uses an uplink beam corresponding to TCI_state12 to transmit information to another TRP, and uses a beam corresponding to TCI_state8 to receive information from this TRP. Therefore, for the TCI state information corresponding to each codepoint, the terminal can correctly determine the corresponding relationships among different TRPs, different TCI state information and different TCI mode information, so that the information can be accurately transmitted according to the indication of the network device.

(3) If RRC is configured for the mixed mode, the codepoint of the TCI field may correspond to one to three pieces of TCI state information. For the sTRP scenario, one piece of TCI state information (corresponding to independent uplink transmission or independent downlink transmission or combined uplink and downlink transmission of one TRP) or two pieces of TCI state information (corresponding to independent uplink TCI and independent downlink TCI of one TRP respectively) may be indicated. For the mTRP scenario, two pieces of TCI state information (corresponding to joint uplink and downlink transmission of one TRP and independent uplink or downlink transmission of another TRP respectively) and three pieces of TCI state information (corresponding to independent uplink and downlink transmission of one TRP and joint uplink and downlink transmission of another TRP respectively) may be indicated. In order to ensure that the terminal can correctly understand TCI modes corresponding to multiple pieces of TCI state information, one implementation is to indicate TCI mode information corresponding to each piece of TCI state information in the MAC-CE signaling that activates the TCI state information, for example, the TCI state information corresponding to a codepoint is shown in the following Table 2:

**Table 2**

| TCI state field -1 | TCI state field -2 |
|---|---|
| TCI_state1 | TCI_state12 |
| Independent downlink TCI | Joint TCI |

The third line is the mode indication of the TCI state field, which represents that TCI_state1 is TCI state information applied to independent downlink transmission, and TCI_state12 is a TCI state applied to joint uplink and downlink transmission. The above method can realize dynamic mode indication through MAC-CE.

In addition, another implementation is that the system predefines that the MAC-CE signaling for activating TCI state information fixedly contains three TCI state fields, and the first TCI state field corresponds to the joint TCI mode, and the second TCI state field and the third TCI state field correspond to the independent uplink mode and the independent downlink mode respectively. For example, the TCI state corresponding to a codepoint is shown in the following Table 3:

**Table 3**

| TCI state field -1 (joint TCI) | TCI state field -2 (independent uplink TCI) | TCI state field -3 (independent downlink TCI) |
|---|---|---|
| TCI_state1 | NULL | TCI_state12 |

For one TRP, A beam corresponding to TCI_state1 may be used for uplink and downlink transmission, and for another TRP, a beam corresponding to TCI_state12 may be used for downlink transmission. Through the above-mentioned static indication method, it can contribute to saving signaling overhead.

Next, the case where TCI mode information corresponding to TCI state information is transmitted by being included in the first message will be explained.

In some embodiments, the TCI mode information corresponding to the TCI state information being transmitted by being included in the first message includes: the first message including a TCI mode information field, which is used to indicate TCI mode information, or the first message including a TCI field, and some bits in the TCI field being used to indicate TCI mode information.

Specifically, one implementation of this embodiment is to add a TCI mode information field in the first message (i.e. DCI signaling). For example, DCI format 1_1/1_2 contains the following information fields as shown in Table 4:

**Table 4**

| TCI mode information field | TCI field |
|---|---|
| 0 | 001 |

The value of '0' in the TCI mode information field represents that there is no TCI of the joint TCI mode in the TCI state information corresponding to the TCI codepoint, that is, all TCI states in the MAC-CE corresponding to 001 are independent TCI state information.

Further, if the value of the TCI mode information field is '1', it represents that the TCI state information corresponding to the TCI codepoint contains TCI state information of the joint TCI mode, and according to the predefinition of the system, the joint TCI state is the first TCI state information corresponding to the codepoint.

In addition, another implementation of this embodiment is that the TCI mode information field includes a plurality of bits, each corresponding to the TCI field of a codepoint in the MAC-CE. For example, for the following codepoints in MAC-CE, 3 bits may be used in the TCI mode information field in DCI signaling, corresponding to the following three TCI state fields respectively. Each bit in DCI signaling indicates whether the TCI mode of each of the following state fields is joint TCI or independent TCI, as shown in Table 5 below:

**Table 5**

| TCI state field -1 | TCI state field -2 | TCI state field -3 |
|---|---|---|
| TCI_state1 | NULL | TCI_state12 |

In addition, another implementation of this embodiment is to use the first n bits of the TCI field in DCI signaling to indicate TCI mode information, and the codepoints of the remaining bits correspond to the codepoints in the activated MAC-CE. For example, DCI format 1_1/1_2 contains the following information field as shown in Table 6:

**Table 6**

| TCI domain |
|---|
| 0001 |

The first bit ('0') is used to indicate TCI mode information, and the remaining bits ('001') are used to indicate codepoints.

In addition, another implementation of this embodiment is to configure a joint TCI mode, an independent TCI mode or a mixed mode for the terminal by using RRC signaling. At the same time, a same or different RRC signaling is used to configure mode indications of different TCI fields in MAC-CE signaling. For example, when the RRC configures a mode to be a mixed mode, the same RRC signaling is used to configure three fields corresponding to each codepoint in the MAC-CE in sequence to be joint TCI, independent uplink TCI and independent downlink TCI, respectively. RRC signaling may also be used to configure whether there is a TCI mode information field in DCI signaling, or N bits of the TCI field may be used for mode indication.

Based on the technical solutions of the above embodiments, the network device can configure different TCI modes for different TRPs by using a static or dynamic mode indication method, and can accurately instruct the terminal to perform different TRP transmission processes for different TRP scenarios, thus realizing different mode configurations of different TRP levels, thus contributing to ensuring the scheduling flexibility and system performance of the communication system.

In some embodiments, the first message being indicative of performing transmission by the terminal according to TCI state information includes: the first message being indicative of performing single transmission receiving sTRP transmission or multi-transmission reception point mTRP transmission by the terminal according to at least one piece of TCI state information, and the at least one piece of TCI state information being indicative of performing uplink transmission and/or downlink transmission. It can be understood that after receiving the first message transmitted by the network device, the terminal determines whether to perform sTRP transmission or mTRP transmission according to the indication of the first message, and determines whether the TCI state information used is specifically used for uplink transmission or downlink transmission.

Optionally, the first message being indicative of performing single transmission reception point sTRP transmission or multi-transmission reception point mTRP transmission by the terminal according to at least one piece of TCI state information includes: when an amount of TCI state information used for uplink/downlink transmission out of the TCI state information included in the first message is one piece, the first message being indicative of performing sTRP transmission or mTRP transmission by the terminal according to TCI state information that takes effect after a previous indication, and performing a next sTRP transmission by the terminal according to the TCI state information in the first message after the TCI state information in the first message takes effect. When the amount of TCI state information used for uplink/downlink transmission is one piece, the amount of TCI state information that takes effect after the previous indication may be one or more, so the terminal can perform sTRP transmission or mTRP transmission according to the TCI state information that takes effect after the previous indication. However, after the TCI state information in the first message takes effect, the terminal performs sTRP transmission in the next transmission because there is only one piece of effective TCI state information.

Specifically, for the case where the amount of the TCI state information for uplink/downlink transmission is one piece, it means that the transmission mode configured by the network device for the terminal is sTRP transmission. Because in Rel-17, the TCI state information indicated in the sTRP transmission process cannot be used until it is confirmed to be effective, in this embodiment, the terminal may perform sTRP transmission or mTRP transmission according to the TCI state information that takes effect after the previous indication, and the TCI state information indicated this time is used for a next sTRP transmission after it takes effect.

Optionally, for the case where the amount of the TCI state information for uplink/downlink transmission is one piece, and the first message is indicative of performing sTRP transmission or mTRP transmission by the terminal according to the TCI state information that takes effect after the previous indication, and if the amount of TCI state information for uplink/downlink transmission out of the TCI state information that takes effect after the previous indication is one piece, the first message is indicative of performing sTRP transmission by the terminal according to the TCI state information that takes effect after the previous indication.

For example, when a value of a codepoint in a TCI field corresponds to one piece of TCI state information, it is represented as TCI_state2. At this time, it corresponds to sTRP transmission. According to the predefined rules of the system, the PDSCH scheduled in the DCI format 1_1/1_2 will be transmitted using the TCI state information (for example, represented as TCI_state0) indicated in the previous DCI format 1_1/1_2 and becoming effective after the previous indication. The terminal uses the receiving beam corresponding to the TCI state information (TCI_state0) that takes effect after the previous indication to receive a PDSCH. After successful reception, HARQ/ACK will be fed back to the network device. TCI_state2 indicated this time will take effect after the HARQ/ACK.

Optionally, for the case where the amount of the TCI state information for uplink/downlink transmission is one piece, and the first message is indicative of performing sTRP transmission or mTRP transmission by the terminal according to the TCI state information that takes effect after the previous indication, and if the amount of the TCI state information for uplink/downlink transmission out of the TCI state information that takes effect after the previous indication is at least two pieces, the first message is indicative of performing mTRP transmission by the terminal according to the TCI state information that takes effect after the previous indication.

For example, further, when a value of a codepoint in a TCI field corresponds to one piece of TCI state information, it is represented as TCI_state2. At this time, it corresponds to sTRP transmission. According to the predefined rules of the system, the PDSCH scheduled in the DCI format 1_1/1_2 will be transmitted using the TCI state information indicated in the previous DCI format 1_1/1_2 and becoming effective after the previous indication. If the TCI state information that takes effect after the previous indication is two pieces of TCI state information (mTRP transmission), such as TCI_state0 and TCI_state5, the terminal will use the receiving beam corresponding to the TCI state information (TCI_state0 and TCI_state5) that takes effect after the previous indication to receive a PDSCH. After successful reception, HARQ/ACK will be fed back to the network device. TCI_state2 indicated this time will take effect after the HARQ/ACK.

Optionally, the first message being indicative of performing single transmission reception point sTRP transmission or multi-transmission reception point mTRP transmission by the terminal according to the at least one piece of TCI state information includes: when the amount of the TCI state information for uplink/downlink transmission out of the TCI state information included in the first message is at least two pieces, the first message being indicative of performing mTRP transmission by the terminal according to the TCI state information in the first message.

Specifically, for the case where the amount of the TCI state information for uplink/downlink transmission is at least two pieces, it means that the transmission mode configured by the network device for the terminal is mTRP transmission. In Rel-18, the terminal can perform mTRP transmission, so the terminal can directly perform mTRP transmission according to the TCI state information in the first message.

For example, suppose that the terminal is configured to work in the joint TCI state. When a value of a codepoint in a TCI field corresponds to two pieces of TCI state information, it is represented as TCI_state1 and TCI_state2. At this time, the two pieces of TCI state information correspond to two TRPs. In this way, according to the predefined rules of the system, a PDSCH scheduled in the DCI format 1_1/1_2 will be transmitted respectively from two different TRPs by using the two pieces of TCI state information, thus realizing mTRP transmission. Based on the predefined rules of the system, upon receiving the DCI, the terminal will use the receiving beams corresponding to the two pieces of TCI state information to receive the PDSCH from different TRPs. After successful reception of the PDSCH, the terminal will feed back HARQ/ACK information to the network device.

In some embodiments, the method also includes: the network device transmitting TRP indication field information to the terminal, where the TRP indication field information is indicative of performing sTRP transmission or mTRP transmission, and the TRP indication field information is transmitted by being included in the first message or transmitted independently of the first message. The first message is indicative of performing sTRP transmission or mTRP transmission by the terminal according to the TRP indication field information and the at least one piece of TCI state information.

In this embodiment, the network device can directly transmit the TRP indication field information to the terminal, that is, directly instruct the terminal to perform sTRP transmission or mTRP transmission, so that the terminal does not need to determine whether to perform sTRP transmission or mTRP transmission according to the amount of the TCI state information in the first message.

Optionally, one implementation of the TRP indication field information may only contain 1 bit, and 0 or 1 is used to indicate sTRP or mTRP. Another implementation of the TRP indication field information may contain 2 bits. For example, "00" represents sTRP and uses the first TCI state information/TCI state information group, "01" represents sTRP and uses the second TCI state information/TCI state information group, and "10" represents mTRP.

In some embodiments, the first message being indicative of performing sTRP transmission or mTRP transmission by the terminal according to the TRP indication field information and the at least one piece of TCI state information includes: the first message being indicative of performing sTRP transmission or mTRP transmission by the terminal according to the TRP indication field information and the TCI state information that takes effect after the previous indication, and performing a next sTRP transmission or a next mTRP transmission by the terminal according to the TCI state information in the first message after the TCI state information in the first message takes effect; or, the first message being indicative of performing sTRP transmission or mTRP transmission by the terminal according to the TRP indication field information and the at least one piece of TCI state information in the first message.

In this embodiment, the terminal can perform current sTRP transmission or mTRP transmission according to the TCI state information that takes effect after the previous indication, and the TCI state information indicated this time is used for a next sTRP transmission or a next mTRP after it takes effect. Or, the terminal can directly perform sTRP transmission or mTRP transmission according to the TCI state information in the first message.

In some embodiments, the first message being indicative of performing sTRP transmission or mTRP transmission by the terminal according to the TRP indication field information and the TCI state information that takes effect after the previous indication includes any of the following.
(1) When the TRP indication field information is indicative of performing mTRP transmission, and if the amount of the TCI state information used for uplink/downlink transmission out of the TCI state information that takes effect after the previous indication is one piece, the first message is indicative of performing sTRP transmission by the terminal according to the TCI state information that takes effect after the previous indication.

For example, suppose that the terminal is configured to work in the joint TCI state, and a value of a codepoint in a TCI field corresponds to two pieces of TCI state information, which are represented as TCI_state1 and TCI_state2. When TRP indication field information indicates mTRP, a PDSCH scheduled in the DCI format 1_1/1_2 will be transmitted using the TCI state information that takes effect after the previous indication. If there is only one piece of TCI state information that takes effect after the previous indication, such as TCI_state5, the TRP indication field information is ignored and only this TCI_state5 is used to implement sTRP transmission, or, the terminal and the network device agree that it is not allowed to configure mTRP transmission at this time.

The terminal uses the receiving beam corresponding to the TCI state to receive a PDSCH. After successful reception, HARQ/ACK will be fed back to the network device. After that, TCI_state1 and TCI_state2 indicated by DCI will take effect.

(2) When the TRP indication field information is indicative of performing mTRP transmission, and if the amount of the TCI state information used for uplink/downlink transmission out of the TCI state information that takes effect after the previous indication is at least two pieces, the first message is indicative of performing mTRP transmission by the terminal according to the TCI state information that takes effect after the previous indication.

For example, suppose that the terminal is configured to work in the joint TCI state, and a value of a codepoint in a TCI field corresponds to two pieces of TCI state information, which are represented as TCI_state1 and TCI_state2. When the TRP indication field information indicates mTRP, a PDSCH scheduled in the DCI format 1_1/1_2 will be transmitted using TCI state information (such as TCI_state5 and TCI_state6) that takes effect after the previous indication, thus realizing mTRP transmission.

(3) When the TRP indication field information is indicative of performing sTRP transmission, and if the amount of the TCI state information used for uplink/downlink transmission out of the TCI state information that takes effect after the previous indication is one piece, the first message is indicative of performing sTRP transmission by the terminal according to the TCI state information that takes effect after the previous indication.

For example, when TRP indication field information indicates sTRP, a PDSCH scheduled in the DCI format 1_1/1_2 will be transmitted using TCI state information (such as TCI_state5) that takes effect after the previous indication, thus realizing sTRP transmission.

(4) When the TRP indication field information is indicative of performing sTRP transmission, and if the amount of the TCI state information used for uplink/downlink transmission out of the TCI state information that takes effect after the previous indication is at least two pieces, the TRP indication field information is further indicative of selecting one of the at least two pieces of TCI state information used for uplink/downlink transmission as currently used target TCI state information by the terminal, and performing sTRP transmission by the terminal through the target TCI state information.

For example, when the TRP indication field information indicates sTRP, a PDSCH scheduled in the DCI format 1_1/1_2 will be transmitted using one of the TCI state information (such as TCI_state5 and TCI_state6) that takes effect after the previous indication, thus realizing sTRP transmission. One way is to predefine rules by the system to perform transmission using the first TCI state information that takes effect after the previous indication, or to perform transmission using the TCI state information with the lowest ID. In this way, the PDSCH will be transmitted using TCI_state5 to implement sTRP transmission. It is also possible to use one of the TCI state information for transmission according to the configuration of the system. Or, the TRP indication field information further indicates which TCI state information to use for transmission. The terminal uses the receiving beam corresponding to the TCI state to receive a PDSCH. After successful reception, HARQ/ACK will be fed back to the network device. After that, TCI_state1 and TCI_state2 indicated by DCI will take effect.

In some embodiments, the first message being indicative of performing sTRP transmission or mTRP transmission by the terminal according to the TRP indication field information and the at least one piece of TCI state information in the first message includes any of the following.
(1) When the TRP indication field information indicates mTRP transmission, the first message is indicative of performing mTRP transmission by the terminal according to the TCI state information in the first message.

For example, when the TRP indication field information indicates mTRP, mTRP transmission of the PDSCH scheduled by the DCI is performed using the TCI state information indicated in the DCI. Assuming that the terminal is configured to work in the joint TCI state, a value of a codepoint in a TCI field corresponds to two pieces of TCI state information, which are represented as TCI_state1 and TCI_state2. When the TRP indication field information indicates mTRP, a PDSCH scheduled in the DCI format 1_1/1_2 will be transmitted respectively from two different TRPs by using the two pieces of TCI state information, thus realizing mTRP transmission. Based on the predefined rules of the system, upon receiving the DCI, the terminal will use the receiving beams corresponding to the two pieces of TCI state information to receive the PDSCH from different TRPs. After successful reception of the PDSCH, the terminal will feed back HARQ/ACK information to the network device.

(2) When the TRP indication field information indicates sTRP transmission, and if the amount of the TCI state information used for uplink/downlink transmission out of the TCI state information included in the first message is one piece, the first message is indicative of performing sTRP transmission by the terminal according to the TCI state information in the first message.

For example, when the TRP indication field information in DCI format 1_1/1_2 indicates sTRP, a PDSCH scheduled by the DCI is transmitted using the TCI state information indicated in the DCI. Assuming that the terminal is configured to work in the joint TCI state, a value of a codepoint in a TCI field corresponds to one piece of TCI state information, which is represented as TCI_state1, sTRP transmission of the PDSCH scheduled in the DCI format 1_1/1_2 will be performed using TCI_state1, that is, the terminal will use the receiving beam corresponding to the TCI state information to receive the PDSCH from TRP. After successful reception of the PDSCH, the terminal will feed back HARQ/ACK information to the network device.

(3) When the TRP indication field information is indicative of performing sTRP transmission, and if the amount of the TCI state information used for uplink/downlink transmission out of the TCI state information included in the first message is at least two pieces, the TRP indication field information is further indicative of selecting one of the at least two pieces of TCI state information used for uplink/downlink transmission as currently used target TCI state information by the terminal, and performing sTRP transmission by the terminal through the target TCI state information.

For example, when the TRP indication field information in DCI format 1_1/1_2 indicates sTRP, a PDSCH scheduled by the DCI is transmitted using the TCI state information indicated in the DCI. Assuming that the terminal is configured to work in the joint TCI state, a value of a codepoint in a TCI field corresponds to two pieces of TCI state information, which are represented as TCI_state1 and TCI_state2, the terminal selects one from TCI_state1 and TCI_state2 as currently used target TCI state information. For example, if it is determined that the PDSCH scheduled in DCI format 1_1/1_2 will be transmitted using TCI_state2, the terminal uses the receiving beam corresponding to TCI_state2 to receive the PDSCH. After successful reception, HARQ/ACK will be fed back to the network device.

In some embodiments, in a case that the first message is indicative of performing sTRP transmission or mTRP transmission by the terminal according to the TRP indication field information and the at least one piece of TCI state information in the first message, and if a time slot interval between a first time instant and a second time instant is less than or equal to a threshold value, the sTRP transmission or mTRP transmission indicated by the first message is performed according to one or more kinds of the following TCI state information: one or more pieces of TCI state information used by the network device to transmit the first message, one or more pieces of TCI state information in an effective state at the beginning of the sTRP transmission or mTRP transmission indicated by the first message, TCI state information corresponding to a predefined codepoint out of TCI state information whose activation is indicated by the network device. The first time instant is a time instant when the terminal receives the first message, and the second time instant is a time instant when the terminal receives the sTRP transmission or the mTRP transmission indicated by the first message.

The threshold value may be configured by the network device, or be configured by the network device after that the terminal reports to the network device according to its own demodulation ability.

One or more pieces of TCI state information used by the network device to transmit the first message refer to one or more pieces of TCI state information used when the first message is transmitted. One or more pieces of TCI state information in an effective state at the beginning of the sTRP transmission or the mTRP transmission indicated by the first message refer to one or more pieces of TCI state information in an effective state at the terminal side before the terminal receives the sTRP transmission or the mTRP transmission indicated by the first message, such as TCI state information adopted when the terminal receives the last sTRP transmission or the last mTRP transmission. The TCI state information whose activation is indicated by the network device is TCI state information that the network device instructs the terminal to activate before transmitting the first message, and the predefined codepoint is a preconfigured codepoint in the communication system. In the communication system, it is possible to predefine that in a case that the time slot between the first instant and the second instant is less than the threshold value, the TCI state information corresponding to which codepoint is specifically adopted as the TCI state information for the terminal to perform sTRP transmission or mTRP transmission.

In this embodiment, if the time slot interval between the time instant when the terminal receives the first message (i.e., the first time instant) and the time instant when the terminal receives the sTRP transmission or mTRP transmission indicated by the first message (i.e., the second time instant) is less than the threshold value, the terminal may not be able to demodulate the TCI state information in the first message before receiving the sTRP transmission or mTRP transmission indicated by the first message, and may not be able to receive the sTRP transmission or mTRP transmission indicated by the first message according to the TCI state information in the first message. In view of this situation, it is necessary to predefine the TCI state information used for the sTRP transmission or mTRP transmission indicated by the first message in the communication system. Specifically, the sTRP transmission or mTRP transmission indicated by the first message may be performed according to one or more kinds of the following TCI state information: one or more pieces of TCI state information used by the network device to transmit the first message, one or more pieces of TCI state information in an effective state at the beginning of the sTRP transmission or mTRP transmission indicated by the first message, TCI state information corresponding to a predefined codepoint out of the TCI state information whose activation is indicated by the network device. Therefore, the affection on the data transmission of the terminal, which is caused by the fact that the TCI state information in the first message cannot be analyzed in time when the first time instant is too close to the second time instant, will be avoided, thus improving the reliability and stability of communication between the terminal and network device.

An example is taken where the first message is DCI format 1_1/1_2 and the sTRP transmission or mTRP transmission indicated by the first message is for a PDSCH, when the time slot interval between the terminal receiving DCI format 1_1/1_2 and the terminal receiving the PDSCH indicated by the DCI format 1_1/1_2 is less than the threshold value, the terminal cannot demodulate the DCI state information in DCI format 1_1/1_2 before receiving the PDSCH, and it is necessary to predefine the TCI state information to be used by the terminal to receive the PDSCH. The process of predefining the TCI state information to be used by the terminal to receive the PDSCH is as follows.

(1) The terminal is configured to work in the joint TCI state. When DCI format 1_1/1_2 is transmitted, the TCI state information adopted by this DCI format 1_1/1_2 is TCI_state1 and TCI_state2, so one of TCI_state1 or TCI_state2 may be configured as the TCI state information for transmission of the PDSCH, or TCI_state1 and TCI_state2 may be configured as the TCI state information of transmission of the PDSCH.

For example, from TCI_state1 and TCI_state2, it is determined that TCI state information TCI_state1 has the smallest ID, and the terminal uses a receiving beam corresponding to TCI_state1 to receive the PDSCH. After successful reception of the PDSCH, the terminal can feed back HARQ/ACK to the network device.
(2) The terminal is configured to work in the joint TCI state. When DCI format 1_1/1_2 is transmitted, the TCI state information used by this DCI format 1_1/1_2 is TCI_state2, so the terminal may be configured to use the same TCI state information (TCI_state2) as the TCI state information for receiving the PDSCH.
(3) When the terminal performs the transmission of the PDSCH indicated by DCI format 1_1/1_2, the TCI state information in effect is TCI_state3 and TCI_state4, so the terminal may be configured to use one of TCI_state3 or TCI_state4 as the TCI state information for receiving the PDSCH, or the terminal may be configured to use TCI_state3 and TCI_state4 as the TCI state information for receiving the PDSCH.

For example, from TCI_state3 and TCI_state4 that are in effect, it is determined that TCI_state3 has the smallest ID, and the terminal may use a receiving beam corresponding to TCI_state3 to receive the PDSCH. After successful reception of the PDSCH, the terminal can feed back HARQ/ACK to the network device.

(4) When the network device transmits DCI format 1_1/1_2 to the terminal, or when the transmission of the PDSCH is performed between the network device and the terminal, or before the transmission of the PDSCH is performed between the network device and the terminal, the network device may indicate TCI state information to be activated to the terminal through a MAC-CE. The MAC-CE may contain eight codepoints, which correspond to eight groups of TCI state information respectively, that is, eight codepoints are used to activate 8 groups of TCI state information respectively. As shown in Table 1 below, codepoint 000 corresponds to one piece of TCI state information: TCI-State 3; codepoint 001 corresponds to two pieces of TCI state information: TCI-State9 and TCI-State 10; ...... (not described one by one); codepoint 111 corresponds to two pieces of TCI state information: TCI-State88 and TCI-State98.

| Codepoint | Activation TCI state information -1 | Activation TCI state information - 2 |
|---|---|---|
| 000 | TCI-State3 | |
| 001 | TCI-State9 | TCI-State10 |
| 010 | TCI-State18 | TCI-State19 |
| 011 | TCI-State25 | TCI-State29 |
| 100 | TCI-State36 | |
| 101 | TCI-State7 | TCI-State2 |
| 110 | TCI-State100 | TCI-State102 |
| 111 | TCI-State88 | TCI-State98 |

Based on Table 1:
In one way, in the communication system, the lowest codepoint corresponding to two pieces of TCI state information may be predefined as the codepoint corresponding to the TCI state information used for receiving the PDSCH. Then, in Table 1, the terminal may use TCI-State9 and TCI-State10 corresponding to codepoint 001 to receive the PDSCH.

In another way, in the communication system, the TCI state information corresponding to the lowest codepoint may be predefined as the TCI state information for receiving the PDSCH. Then, in Table 1, the terminal may use TCI-State3 corresponding to codepoint 000 to receive the PDSCH.

In some embodiments, the amount of the TRP indication field information is at least two pieces, and respective TRP indication field information corresponds to different channels and/or reference signals.

Specifically, DCI_format 1_1/1_2 may also include multiple pieces of TRP indication field information respectively corresponding to different channels and/or reference signals, for example, respectively corresponding to PDCCH/PUCCH/PUSCH/SRS/CSI-RS, etc., so as to represent that a corresponding channel adopts sTRP transmission or mTRP transmission.

In some embodiments, after the network device transmits the TCI state information to the terminal through the first message, if the network device indicates that the TRP indication field information does not exist in the first message, or indicates through another message that the TRP indication field information is not transmitted, the terminal works according to the working mode of Rel-17, that is, performs sTRP transmission.

In some embodiments, the method further includes receiving a confirmation message for the first message, where the confirmation message is transmitted by the terminal after receiving the first message, and the confirmation message is used to determine the effective time of the TCI state information indicated by the first message.

Optionally, the confirmation message is, for example, a HARQ/ACK feedback message.

Optionally, when the TCI state information indicated in DCI format 1_1/1_2 corresponds to sTRP transmission or mTRP transmission, the terminal feeds back HARQ/ACK of this DCI, and after this HARQ/ACK, the TCI state information indicated by this DCI takes effect, that is, representing that the TCI state information indicated this time is used for this transmission. At this time, after receiving DCI format 1_1/1_2, the terminal will feed back the HARQ/ACK of this DCI. And the TCI state information indicated by this DCI takes effect after the HARQ/ACK. If the PDSCH scheduled by this DCI is transmitted after the TCI state information indicated this time takes effect, sTRP transmission (DCI indicates one piece of TCI state information) or mTRP transmission (DCI indicates two pieces of TCI state information) of the PDSCH will be performed according to the TCI state information indicated in this DCI. After correctly receiving the PDSCH, the terminal will further feed back HARQ/ACK information corresponding to the PDSCH to the network device.

Optionally, when the TCI state information indicated in DCI format 1_1/1_2 corresponds to sTRP, the PDSCH scheduled by this DCI is transmitted using the TCI state information that takes effect after the previous indication, that is, the terminal does not feed back HARQ/ACK of this DCI indication. When the indicated TCI state information corresponds to mTRP, the terminal feeds back HARQ/ACK of this DCI, and after this HARQ/ACK, the TCI state indicated by this DCI takes effect. It is assumed that the terminal is configured to work in the joint TCI state. When a value of a codepoint in a TCI field corresponds to two pieces of TCI state information, they are represented as TCI_state1 and TCI_state2. At this time, the two pieces of TCI state information correspond to two TRPs. In this way, according to the predefined rules of the system, the terminal will feed back the HARQ/ACK of this DCI after receiving the DCI. And TCI_state1 and TCI_state2 take effect after this HARQ/ACK. If a PDSCH scheduled by this DCI is transmitted after TCI_state1 and TCI_state2 take effect, the PDSCH will be transmitted using the two pieces of TCI state information from two different TRPs respectively, thus realizing mTRP transmission. After the terminal correctly receives the PDSCH, the terminal will further feed back HARQ/ACK information corresponding to the PDSCH to the network device.

Optionally, when a value of a codepoint in a TCI field corresponds to one piece of TCI state information, it is represented as TCI_state2. At this time, it corresponds to sTRP transmission. According to the predefined rules of the system, a PDSCH scheduled in DCI format 1_1/1_2 will be transmitted using the TCI state information (for example, represented as TCI_state0) that takes effect after the previous indication. The terminal uses a receiving beam corresponding to the TCI state information (TCI_state0) that takes effect after the previous indication to receive the PDSCH. After successful reception, the HARQ/ACK of this PDSCH will be fed back to the base station. TCI_state2 indicated this time will take effect after this HARQ/ACK.

In this embodiment, by adding a confirmation message for the signaling, it is ensured that the transmission mode of the PDSCH scheduled by DCI matches the transmission mode of sTRP or mTRP indicated by the DCI.

It should be understood that although the steps in the flowchart of the above embodiments are displayed in sequence as indicated by the arrows, these steps are not necessarily executed in sequence as indicated by the arrows. Unless explicitly stated herein, the execution of these steps is not strictly limited in order, and they can be executed in other orders. Moreover, at least a part of the steps in the diagram may include a plurality of sub-steps or stages, which may not necessarily be completed at the same time, but may be executed at different times, and the order of the execution may not necessarily be sequential, instead, they may be executed with other steps or at least a part of sub-steps or stages of other steps in turn or alternately.

In some embodiments, a beam indication apparatus is provided, which is applied to a network device.

FIG. 3 is a schematic diagram of a beam indication apparatus provided by an embodiment of the present disclosure. As shown in FIG. 3, the apparatus includes:
an acquiring module 310, configured to acquiring transmission capability information of a terminal; and
a transmitting module 320, configured to transmit a first message to the terminal according to the transmission capability information, where the first message includes at least one piece of transmission configuration indication TCI state information, and the first message is indicative of performing transmission by the terminal according to the TCI state information.

In some embodiments, the acquiring module 310 is further configured to transmit TCI mode information corresponding to the TCI state information to the terminal, where the TCI mode information corresponding to the TCI state information is used to indicate that the TCI state information is applied to uplink transmission and/or downlink transmission, and the TCI mode information corresponding to the TCI state information is transmitted by being included in the first message or transmitted independently of the first message; where the TCI mode information includes a first TCI mode and/or a second TCI mode, and in the first TCI mode, the TCI state information used for uplink transmission is the same as the TCI state information used for downlink transmission; and in the second TCI mode, the TCI state information used for uplink transmission is different from the TCI state information used for downlink transmission.

In some embodiments, the TCI mode information corresponding to the TCI state information being transmitted independently of the first message includes: transmitting the TCI mode information corresponding to the TCI state information to the terminal by using one piece of signaling or using at least two pieces of signaling; where each of the at least two pieces of signaling is associated with a control resource set CORESET or a CORESET group, and the CORESET group includes CORESETs with a same identifier.

In some embodiments, the transmitting the TCI mode information corresponding to the TCI state information to the terminal by using one piece of signaling or at least two pieces of signaling includes: transmitting one second message or at least two second messages to the terminal; where the second message includes one or more TCI state fields and TCI mode information corresponding to each of the TCI state fields, or, the second message includes one or more TCI state fields, and each of the TCI state fields in the second message is preset to correspond to one kind of TCI mode information.

In some embodiments, the TCI mode information corresponding to the TCI state information being transmitted by being included in the first message includes: the first message includes a TCI mode information field, and the TCI mode information field is used to indicate the TCI mode information; or, the first message includes a TCI field, and some bits in the TCI field are used to indicate the TCI mode information.

In some embodiments, the first message being indicative of performing transmission by the terminal according to the TCI state information includes: the first message is indicative of performing single transmission reception point sTRP transmission or multi-transmission reception point mTRP transmission by the terminal according to the at least one piece of TCI state information, and the at least one piece of TCI state information is indicative of performing uplink transmission and/or downlink transmission.

In some embodiments, the first message being indicative of performing single transmission reception point sTRP transmission or multi-transmission reception point mTRP transmission by the terminal according to the at least one piece of TCI state information includes: when an amount of TCI state information used for uplink/downlink transmission out of the TCI state information included in the first message is one piece, the first message is indicative of performing sTRP transmission or mTRP transmission by the terminal according to TCI state information that takes effect after a previous indication, and performing a next sTRP transmission by the terminal according to the TCI state information in the first message after the TCI state information in the first message takes effect; or, when an amount of TCI state information used for uplink/downlink transmission out of the TCI state information included in the first message is at least two pieces, the first message is indicative of performing mTRP transmission by the terminal according to the TCI state information in the first message.

In some embodiments, the first message being indicative of performing sTRP transmission or mTRP transmission by the terminal according to TCI state information that takes effect after a previous indication includes: if an amount of TCI state information used for uplink/downlink transmission out of the TCI state information that takes effect after the previous indication is one piece, the first message is indicative of performing sTRP transmission by the terminal according to the TCI state information that takes effect after the previous indication; if an amount of TCI state information used for uplink/downlink transmission out of the TCI state information that takes effect after the previous indication is at least two pieces, the first message is indicative of performing mTRP transmission by the terminal according to the TCI state information that takes effect after the previous indication.

In some embodiments, the transmitting module 320 is further configured to transmit TRP indication field information to the terminal, where the TRP indication field information is indicative of performing sTRP transmission or mTRP transmission, and the TRP indication field information is transmitted by being included in the first message or transmitted independently of the first message; where the first message is indicative of performing sTRP transmission or mTRP transmission by the terminal according to the TRP indication field information and the at least one piece of TCI state information.

In some embodiments, the first message being indicative of performing sTRP transmission or mTRP transmission by the terminal according to the TRP indication field information and the at least one piece of TCI state information includes: the first message is indicative of performing sTRP transmission or mTRP transmission by the terminal according to the TRP indication field information and TCI state information that takes effect after a previous indication, and performing a next sTRP transmission or a next mTRP transmission by the terminal according to the TCI state information in the first message after the TCI state information in the first message takes effect; or, the first message is indicative of performing sTRP transmission or mTRP transmission by the terminal according to the TRP indication field information and the at least one piece of TCI state information in the first message.

In some embodiments, the first message being indicative of performing sTRP transmission or mTRP transmission by the terminal according to the TRP indication field information and TCI state information that takes effect after a previous indication includes: when the TRP indication field information is indicative of performing mTRP transmission, and if an amount of TCI state information used for uplink/downlink transmission out of the TCI state information that takes effect after the previous indication is one piece, the first message is indicative of performing sTRP transmission by the terminal according to the TCI state information that takes effect after the previous indication; or, when the TRP indication field information is indicative of performing mTRP transmission, and if an amount of TCI state information used for uplink/downlink transmission out of the TCI state information that takes effect after the previous indication is at least two pieces, the first message is indicative of performing mTRP transmission by the terminal according to the TCI state information that takes effect after the previous indication; or, when the TRP indication field information is indicative of performing sTRP transmission, and if an amount of TCI state information used for uplink/downlink transmission out of the TCI state information that takes effect after the previous indication is one piece, the first message is indicative of performing sTRP transmission by the terminal according to the TCI state information that takes effect after the previous indication; or, when the TRP indication field information is indicative of performing sTRP transmission, and if an amount of TCI state information used for uplink/downlink transmission out of the TCI state information that takes effect after the previous indication is at least two pieces, the TRP indication field information is further indicative of selecting one of the at least two pieces of TCI state information used for uplink/downlink transmission as currently used target TCI state information by the terminal, and performing sTRP transmission by the terminal through the target TCI state information.

In some embodiments, the first message being indicative of performing sTRP transmission or mTRP transmission by the terminal according to the TRP indication field information and the at least one piece of TCI state information in the first message includes: when the TRP indication field information is indicative of performing mTRP transmission, the first message is indicative of performing mTRP transmission by the terminal according to the TCI state information in the first message; or, when the TRP indication field information is indicative of performing sTRP transmission, and if an amount of TCI state information used for uplink/downlink transmission out of the TCI state information included in the first message is one piece, the first message is indicative of performing sTRP transmission by the terminal according to the TCI state information in the first message; or, when the TRP indication field information is indicative of performing sTRP transmission, and if an amount of TCI state information used for uplink/downlink transmission out of the TCI state information included in the first message is at least two pieces, the TRP indication field information is further indicative of selecting one of the at least two pieces of TCI state information used for uplink/downlink transmission as currently used target TCI state information by the terminal, and performing sTRP transmission by the terminal through the target TCI state information.

In some embodiments, in a case that the first message is indicative of performing sTRP transmission or mTRP transmission by the terminal according to the TRP indication field information and the at least one piece of TCI state information in the first message, and if a time slot interval between a first time instant and a second time instant is less than or equal to a threshold value, the sTRP transmission or mTRP transmission indicated by the first message is performed according to one or more kinds of the following TCI state information: one or more pieces of TCI state information used by the network device to transmit the first message; one or more pieces of TCI state information in an effective state at the beginning of the sTRP transmission or mTRP transmission indicated by the first message; TCI state information corresponding to a predefined codepoint out of TCI state information whose activation is indicated by the network device; where the first time instant is a time instant when the terminal receives the first message, and the second time instant is a time instant when the terminal receives the sTRP transmission or the mTRP transmission indicated by the first message.

In some embodiments, an amount of the TRP indication field information is at least two pieces, and respective TRP indication field information corresponds to different channels and/or reference signals.

In some embodiments, the beam indication apparatus further includes: a receiving unit (not shown), configured to receive a confirmation message for the first message, where the confirmation message is transmitted by the terminal after receiving the first message, and the confirmation message is used to determine an effective time of the TCI state information indicated by the first message.

In some embodiments, the acquiring module is specifically configured to receive a third message transmitted by the terminal, where the third message includes the transmission capability information.

In some embodiments, a beam indication apparatus is provided, which is applied to a terminal.

FIG. 4 is a schematic diagram of a beam indication apparatus provided by an embodiment of the present disclosure. As shown in FIG. 4, the apparatus includes:
a receiving module 410, configured to receive a first message from a network device, where the first message includes at least one transmission configuration indication TCI state information; and
a transmission module 420, configured to perform transmission according to the TCI state information.

In some embodiments, the beam indication apparatus further includes: a first acquiring module (not shown in the figure), configured to acquire, from the first message, TCI mode information corresponding to the TCI state information; or, the receiving module 410 is further configured to receive TCI mode information corresponding to the TCI state information and transmitted by the network device independently of the first message, where the TCI mode information corresponding to the TCI state information is used to indicate that the TCI state information is applied to uplink transmission and/or downlink transmission; where the TCI mode information includes a first TCI mode and/or a second TCI mode, and in the first TCI mode, the TCI state information used for uplink transmission is the same as the TCI state information used for downlink transmission; and in the second TCI mode, the TCI state information used for uplink transmission is different from the TCI state information used for downlink transmission.

In some embodiments, in the process of the receiving, from the network device, TCI mode information corresponding to the TCI state information, the receiving module 410 is specifically configured to receive the TCI mode information corresponding to the TCI state information and transmitted by the network device using one piece of signaling or using at least two pieces of signaling; where each of the at least two pieces of signaling is associated with a control resource set CORESET or a CORESET group, and the CORESET group includes CORESETs with a same identifier.

In some embodiments, in the process of the receiving the TCI mode information corresponding to the TCI state information and transmitted by the network device using one piece of signaling or using at least two pieces of signaling, the receiving module 410 is specifically configured to receive one second message or at least two second messages transmitted by the network device; where the second message includes one or more TCI state fields and TCI mode information corresponding to each of the TCI state fields, or, the second message includes one or more TCI state fields, and each of the TCI state fields in the second message is preset to correspond to one kind of TCI mode information.

In some embodiments, the first message includes a TCI mode information field, and the TCI mode information field is used to indicate the TCI mode information; or, the first message includes a TCI field, and some bits in the TCI field are used to indicate the TCI mode information.

In some embodiments, the performing transmission according to the TCI state information includes: performing, according to the at least one piece of TCI state information, single transmission reception point sTRP transmission or multi-transmission reception point mTRP transmission, where the at least one piece of TCI state information is indicative of performing uplink transmission and/or downlink transmission.

In some embodiments, in the process of the performing, according to the at least one piece of TCI state information, single transmission reception point sTRP transmission or multi-transmission reception point mTRP transmission, the transmission module 420 is specifically configured to: when an amount of TCI state information used for uplink/downlink transmission out of the TCI state information included in the first message is one piece, perform sTRP transmission or mTRP transmission according to TCI state information that takes effect after a previous indication, and perform a next sTRP transmission according to the TCI state information in the first message after the TCI state information in the first message takes effect; or, when an amount of TCI state information used for uplink/downlink transmission out of the TCI state information included in the first message is at least two pieces, perform mTRP transmission according to the TCI state information in the first message.

In some embodiments, in the process of the performing sTRP transmission or mTRP transmission according to TCI state information that takes effect after a previous indication, the transmission module 420 is specifically configured to: if the amount of TCI state information used for uplink/downlink transmission out of the TCI state information that takes effect after the previous indication is one piece, perform sTRP transmission according to the TCI state information that takes effect after the previous indication; if the amount of TCI state information used for uplink/downlink transmission out of the TCI state information that takes effect after the previous indication is at least two pieces, perform mTRP transmission according to the TCI state information that takes effect after the previous indication.

In some embodiments, the beam indication apparatus further includes a second acquiring module (not shown in the figure), which acquires TRP indication field information from the first message; or, the receiving module 410 is specifically configured to receive TRP indication field information transmitted by the network device independently of the first message, where the TRP indication field information is indicative of performing sTRP transmission or mTRP transmission. In the process of the performing transmission according to the TCI state information, the transmission module 420 is specifically configured to perform sTRP transmission or mTRP transmission according to the TRP indication field information and the at least one piece of TCI state information.

In some embodiments, in the process of the performing sTRP transmission or mTRP transmission according to the TRP indication field information and the at least one piece of TCI state information, the transmission module 420 is specifically configured to: perform sTRP transmission or mTRP transmission according to the TRP indication field information and TCI state information that takes effect after a previous indication, and perform a next sTRP transmission or a next mTRP transmission according to the TCI state information in the first message after the TCI state information in the first message takes effect; or, perform sTRP transmission or mTRP transmission according to the TRP indication field information and the at least one piece of TCI state information in the first message.

In some embodiments, in the process of the performing sTRP transmission or mTRP transmission according to the TRP indication field information and TCI state information that takes effect after a previous indication, the transmission module 420 is specifically configured to: when the TRP indication field information is indicative of performing mTRP transmission, and if an amount of TCI state information used for uplink/downlink transmission out of the TCI state information that takes effect after the previous indication is one piece, perform sTRP transmission according to the TCI state information that takes effect after the previous indication; or, when the TRP indication field information is indicative of performing mTRP transmission, and if an amount of TCI state information used for uplink/downlink transmission out of the TCI state information that takes effect after the previous indication is at least two pieces, perform mTRP transmission according to the TCI state information that takes effect after the previous indication; or, when the TRP indication field information is indicative of performing sTRP transmission, and if an amount of TCI state information used for uplink/downlink transmission out of the TCI state information that takes effect after the previous indication is one piece, perform sTRP transmission according to the TCI state information that takes effect after the previous indication; or, when the TRP indication field information is indicative of performing sTRP transmission, and if an amount of TCI state information used for uplink/downlink transmission out of the TCI state information that takes effect after the previous indication is at least two pieces, select one of the at least two pieces of TCI state information used for uplink/downlink transmission as currently used target TCI state information, and perform sTRP transmission through the target TCI state information.

In some embodiments, in the process of the performing sTRP transmission or mTRP transmission according to the TRP indication field information and the at least one piece of TCI state information in the first message, the transmission module 420 is specifically configured to: when the TRP indication field information is indicative of performing mTRP transmission, perform mTRP transmission according to the TCI state information in the first message; or, when the TRP indication field information is indicative of performing sTRP transmission, and if an amount of TCI state information used for uplink/downlink transmission out of the TCI state information included in the first message is one piece, perform sTRP transmission according to the TCI state information in the first message; or, when the TRP indication field information is indicative of performing sTRP transmission, and if an amount of TCI state information used for uplink/downlink transmission out of the TCI state information included in the first message is at least two pieces, select one of the at least two pieces of TCI state information used for uplink/downlink transmission as currently used target TCI state information, and perform sTRP transmission through the target TCI state information.

In some embodiments, in a case that the first message is indicative of performing sTRP transmission or mTRP transmission by the terminal according to the TRP indication field information and the at least one piece of TCI state information in the first message, and if a time slot interval between a first time instant and a second time instant is less than or equal to a threshold value, the sTRP transmission or mTRP transmission indicated by the first message is performed according to one or more kinds of the following TCI state information: one or more pieces of TCI state information used by the network device to transmit the first message; one or more pieces of TCI state information in an effective state at the beginning of the sTRP transmission or mTRP transmission indicated by the first message; TCI state information corresponding to a predefined codepoint out of TCI state information whose activation is indicated by the network device; where the first time instant is a time instant when the terminal receives the first message, and the second time instant is a time instant when the terminal receives the sTRP transmission or the mTRP transmission indicated by the first message.

In some embodiments, an amount of the TRP indication field information is at least two pieces, and respective TRP indication field information corresponds to different channels and/or reference signals.

In some embodiments, the beam indication apparatus further includes a first transmitting module (not shown in the figure), configured to transmit, after receiving the first message, a confirmation message for the first message to the network device, where the confirmation message is used to determine an effective time of the TCI state information indicated by the first message.

In some embodiments, the beam indication apparatus further includes a second transmitting module (not shown in the figure), configured to transmit a third message to the network device, where the third message includes transmission capability information of the terminal.

For the specific definition about the beam indication apparatus, reference may be made to the definition of the beam indication method above, which will not be repeated here. Each module in the beam indication apparatus may be implemented in whole or in part by software, hardware and their combinations. The above modules may be embedded in or independent of a processor in a computer device in the form of hardware, and may also be stored in a memory in a computer device in the form of software, so that the processor can call and execute the operations corresponding to the above modules.

In some embodiments, a network device is provided.

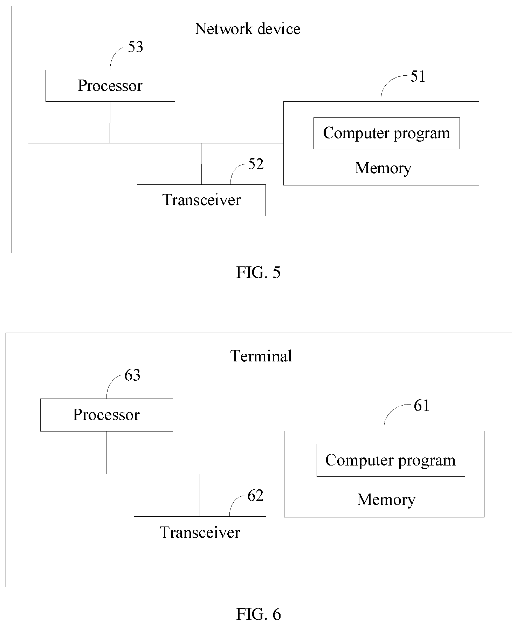

FIG. 5 is a schematic structural diagram of a network device provided by an embodiment of the present disclosure. As shown in FIG. 5, the network device includes a memory 51, a transceiver 52 and a processor 53.

The memory 51 is configured to store a computer program, the transceiver 52 is configured to receive and transmit data under control of the processor, and the processor 53 is configured to read the computer program in the memory and perform the following operations:
acquiring transmission capability information of a terminal; and
transmitting a first message to the terminal according to the transmission capability information, where the first message includes at least one piece of transmission configuration indication TCI state information, and the first message is indicative of performing transmission by the terminal according to the TCI state information.

In some embodiments, the processor 53 is further configured to perform the following operations: transmitting TCI mode information corresponding to the TCI state information to the terminal, where the TCI mode information corresponding to the TCI state information is used to indicate that the TCI state information is applied to uplink transmission and/or downlink transmission, and the TCI mode information corresponding to the TCI state information is transmitted by being included in the first message or transmitted independently of the first message; where the TCI mode information includes a first TCI mode and/or a second TCI mode, and in the first TCI mode, the TCI state information used for uplink transmission is the same as the TCI state information used for downlink transmission; and in the second TCI mode, the TCI state information used for uplink transmission is different from the TCI state information used for downlink transmission.

In some embodiments, the TCI mode information corresponding to the TCI state information being transmitted independently of the first message includes: transmitting the TCI mode information corresponding to the TCI state information to the terminal by using one piece of signaling or using at least two pieces of signaling; where each of the at least two pieces of signaling is associated with a control resource set CORESET or a CORESET group, and the CORESET group includes CORESETs with a same identifier.

In some embodiments, the transmitting the TCI mode information corresponding to the TCI state information to the terminal by using one piece of signaling or at least two pieces of signaling includes: transmitting one second message or at least two second messages to the terminal; where the second message includes one or more TCI state fields and TCI mode information corresponding to each of the TCI state fields, or, the second message includes one or more TCI state fields, and each of the TCI state fields in the second message is preset to correspond to one kind of TCI mode information.

In some embodiments, the TCI mode information corresponding to the TCI state information being transmitted by being included in the first message includes: the first message includes a TCI mode information field, and the TCI mode information field is used to indicate the TCI mode information; or, the first message includes a TCI field, and some bits in the TCI field are used to indicate the TCI mode information.

In some embodiments, the first message being indicative of performing transmission by the terminal according to the TCI state information includes: the first message is indicative of performing single transmission reception point sTRP transmission or multi-transmission reception point mTRP transmission by the terminal according to the at least one piece of TCI state information, and the at least one piece of TCI state information is indicative of performing uplink transmission and/or downlink transmission.

In some embodiments, the first message being indicative of performing single transmission reception point sTRP transmission or multi-transmission reception point mTRP transmission by the terminal according to the at least one piece of TCI state information includes: when an amount of TCI state information used for uplink/downlink transmission out of the TCI state information included in the first message is one piece, the first message is indicative of performing sTRP transmission or mTRP transmission by the terminal according to TCI state information that takes effect after a previous indication, and performing a next sTRP transmission by the terminal according to the TCI state information in the first message after the TCI state information in the first message takes effect; or, when an amount of TCI state information used for uplink/downlink transmission out of the TCI state information included in the first message is at least two pieces, the first message is indicative of performing mTRP transmission by the terminal according to the TCI state information in the first message.

In some embodiments, the first message being indicative of performing sTRP transmission or mTRP transmission by the terminal according to TCI state information that takes effect after a previous indication includes: if an amount of TCI state information used for uplink/downlink transmission out of the TCI state information that takes effect after the previous indication is one piece, the first message is indicative of performing sTRP transmission by the terminal according to the TCI state information that takes effect after the previous indication; if an amount of TCI state information used for uplink/downlink transmission out of the TCI state information that takes effect after the previous indication is at least two pieces, the first message is indicative of performing mTRP transmission by the terminal according to the TCI state information that takes effect after the previous indication.

In some embodiments, the processor 53 is further configured to perform the following operations: transmitting TRP indication field information to the terminal, where the TRP indication field information is indicative of performing sTRP transmission or mTRP transmission, and the TRP indication field information is transmitted by being included in the first message or transmitted independently of the first message; where the first message is indicative of performing sTRP transmission or mTRP transmission by the terminal according to the TRP indication field information and the at least one piece of TCI state information.

In some embodiments, the first message being indicative of performing sTRP transmission or mTRP transmission by the terminal according to the TRP indication field information and the at least one piece of TCI state information includes: the first message is indicative of performing sTRP transmission or mTRP transmission by the terminal according to the TRP indication field information and TCI state information that takes effect after a previous indication, and performing a next sTRP transmission or a next mTRP transmission by the terminal according to the TCI state information in the first message after the TCI state information in the first message takes effect; or, the first message is indicative of performing sTRP transmission or mTRP transmission by the terminal according to the TRP indication field information and the at least one piece of TCI state information in the first message.

In some embodiments, the first message being indicative of performing sTRP transmission or mTRP transmission by the terminal according to the TRP indication field information and TCI state information that takes effect after a previous indication includes: when the TRP indication field information is indicative of performing mTRP transmission, and if an amount of TCI state information used for uplink/downlink transmission out of the TCI state information that takes effect after the previous indication is one piece, the first message is indicative of performing sTRP transmission by the terminal according to the TCI state information that takes effect after the previous indication; or, when the TRP indication field information is indicative of performing mTRP transmission, and if an amount of TCI state information used for uplink/downlink transmission out of the TCI state information that takes effect after the previous indication is at least two pieces, the first message is indicative of performing mTRP transmission by the terminal according to the TCI state information that takes effect after the previous indication; or, when the TRP indication field information is indicative of performing sTRP transmission, and if an amount of TCI state information used for uplink/downlink transmission out of the TCI state information that takes effect after the previous indication is one piece, the first message is indicative of performing sTRP transmission by the terminal according to the TCI state information that takes effect after the previous indication; or, when the TRP indication field information is indicative of performing sTRP transmission, and if an amount of TCI state information used for uplink/downlink transmission out of the TCI state information that takes effect after the previous indication is at least two pieces, the TRP indication field information is further indicative of selecting one of the at least two pieces of TCI state information used for uplink/downlink transmission as currently used target TCI state information by the terminal, and performing sTRP transmission by the terminal through the target TCI state information.

In some embodiments, the first message being indicative of performing sTRP transmission or mTRP transmission by the terminal according to the TRP indication field information and the at least one piece of TCI state information in the first message includes: when the TRP indication field information is indicative of performing mTRP transmission, the first message is indicative of performing mTRP transmission by the terminal according to the TCI state information in the first message; or, when the TRP indication field information is indicative of performing sTRP transmission, and if an amount of TCI state information used for uplink/downlink transmission out of the TCI state information included in the first message is one piece, the first message is indicative of performing sTRP transmission by the terminal according to the TCI state information in the first message; or, when the TRP indication field information is indicative of performing sTRP transmission, and if an amount of TCI state information used for uplink/downlink transmission out of the TCI state information included in the first message is at least two pieces, the TRP indication field information is further indicative of selecting one of the at least two pieces of TCI state information used for uplink/downlink transmission as currently used target TCI state information by the terminal, and performing sTRP transmission by the terminal through the target TCI state information.

In some embodiments, in a case that the first message is indicative of performing sTRP transmission or mTRP transmission by the terminal according to the TRP indication field information and the at least one piece of TCI state information in the first message, and if a time slot interval between a first time instant and a second time instant is less than or equal to a threshold value, the sTRP transmission or mTRP transmission indicated by the first message is performed according to one or more kinds of the following TCI state information: one or more pieces of TCI state information used by the network device to transmit the first message; one or more pieces of TCI state information in an effective state at the beginning of the sTRP transmission or mTRP transmission indicated by the first message; TCI state information corresponding to a predefined codepoint out of TCI state information whose activation is indicated by the network device; where the first time instant is a time instant when the terminal receives the first message, and the second time instant is a time instant when the terminal receives the sTRP transmission or the mTRP transmission indicated by the first message.

In some embodiments, an amount of the TRP indication field information is at least two pieces, and respective TRP indication field information corresponds to different channels and/or reference signals.

In some embodiments, the processor 53 is further configured to perform the following operations: receiving a confirmation message for the first message, where the confirmation message is transmitted by the terminal after receiving the first message, and the confirmation message is used to determine an effective time of the TCI state information indicated by the first message.

In some embodiments, the processor 53 is further configured to perform the following operations: receiving a third message transmitted by the terminal, where the third message includes the transmission capability information.

In some embodiments, a terminal is provided.

FIG. 6 is a schematic structural diagram of a terminal provided by an embodiment of the present disclosure. As shown in FIG. 6, the terminal includes a memory 61, a transceiver 62 and a processor 63.

The memory 61 is configured to store a computer program, the transceiver 62 is configured to transmit and receive data under control of the processor, and the processor 63 is configured to read the computer program in the memory and perform the following operations:
receiving a first message from a network device, where the first message includes at least one transmission configuration indication TCI state information; and
performing transmission according to the TCI state information.

In some embodiments, the processor 63 is further configured to perform the following operations: acquiring, from the first message, TCI mode information corresponding to the TCI state information, or receiving TCI mode information corresponding to the TCI state information and transmitted by the network device independently of the first message, where the TCI mode information corresponding to the TCI state information is used to indicate that the TCI state information is applied to uplink transmission and/or downlink transmission; where the TCI mode information includes a first TCI mode and/or a second TCI mode, and in the first TCI mode, the TCI state information used for uplink transmission is the same as the TCI state information used for downlink transmission; and in the second TCI mode, the TCI state information used for uplink transmission is different from the TCI state information used for downlink transmission.

In some embodiments, in the process of the receiving, from the network device, TCI mode information corresponding to the TCI state information, the processor 63 is further configured to perform the following operations: receiving the TCI mode information corresponding to the TCI state information and transmitted by the network device using one piece of signaling or using at least two pieces of signaling; where each of the at least two pieces of signaling is associated with a control resource set CORESET or a CORESET group, and the CORESET group includes CORESETs with a same identifier.

In some embodiments, in the process of the receiving the TCI mode information corresponding to the TCI state information and transmitted by the network device using one piece of signaling or using at least two pieces of signaling, the processor 63 is further configured to perform the following operations: receiving one second message or at least two second messages transmitted by the network device; where the second message includes one or more TCI state fields and TCI mode information corresponding to each of the TCI state fields, or, the second message includes one or more TCI state fields, and each of the TCI state fields in the second message is preset to correspond to one kind of TCI mode information.

In some embodiments, the first message includes a TCI mode information field, and the TCI mode information field is used to indicate the TCI mode information; or, the first message includes a TCI field, and some bits in the TCI field are used to indicate the TCI mode information.

In some embodiments, in the process of the performing transmission according to the TCI state information, the processor 63 is further configured to perform the following operations: performing, according to the at least one piece of TCI state information, single transmission reception point sTRP transmission or multi-transmission reception point mTRP transmission, where the at least one piece of TCI state information is indicative of performing uplink transmission and/or downlink transmission.

In some embodiments, in the process of the performing, according to the at least one piece of TCI state information, single transmission reception point sTRP transmission or multi-transmission reception point mTRP transmission, the processor 63 is further configured to perform the following operations: when an amount of TCI state information used for uplink/downlink transmission out of the TCI state information included in the first message is one piece, performing sTRP transmission or mTRP transmission according to TCI state information that takes effect after a previous indication, and performing a next sTRP transmission according to the TCI state information in the first message after the TCI state information in the first message takes effect; or, when an amount of TCI state information used for uplink/downlink transmission out of the TCI state information included in the first message is at least two pieces, performing mTRP transmission according to the TCI state information in the first message.

In some embodiments, in the process of the performing sTRP transmission or mTRP transmission according to TCI state information that takes effect after a previous indication, the processor 63 is further configured to perform the following operations: if an amount of TCI state information used for uplink/downlink transmission out of the TCI state information that takes effect after the previous indication is one piece, performing sTRP transmission according to the TCI state information that takes effect after the previous indication; if an amount of TCI state information used for uplink/downlink transmission out of the TCI state information that takes effect after the previous indication is at least two pieces, performing mTRP transmission according to the TCI state information that takes effect after the previous indication.

In some embodiments, the processor 63 is further configured to perform the following operations: acquiring TRP indication field information from the first message, or receiving TRP indication field information transmitted by the network device independently of the first message, where the TRP indication field information is indicative of performing sTRP transmission or mTRP transmission; and the performing transmission according to the TCI state information includes: performing sTRP transmission or mTRP transmission according to the TRP indication field information and the at least one piece of TCI state information.

In some embodiments, in the process of the performing sTRP transmission or mTRP transmission according to the TRP indication field information and the at least one piece of TCI state information, the processor 63 is further configured to perform the following operations: performing sTRP transmission or mTRP transmission according to the TRP indication field information and TCI state information that takes effect after a previous indication, and performing a next sTRP transmission or a next mTRP transmission according to the TCI state information in the first message after the TCI state information in the first message takes effect; or, performing sTRP transmission or mTRP transmission according to the TRP indication field information and the at least one piece of TCI state information in the first message.

In some embodiments, in the process of the performing sTRP transmission or mTRP transmission according to the TRP indication field information and TCI state information that takes effect after a previous indication, the processor 63 is further configured to perform the following operations: when the TRP indication field information is indicative of performing mTRP transmission, and if an amount of TCI state information used for uplink/downlink transmission out of the TCI state information that takes effect after the previous indication is one piece, performing sTRP transmission according to the TCI state information that takes effect after the previous indication; or, when the TRP indication field information is indicative of performing mTRP transmission, and if an amount of TCI state information used for uplink/downlink transmission out of the TCI state information that takes effect after the previous indication is at least two pieces, performing mTRP transmission according to the TCI state information that takes effect after the previous indication; or, when the TRP indication field information is indicative of performing sTRP transmission, and if an amount of TCI state information used for uplink/downlink transmission out of the TCI state information that takes effect after the previous indication is one piece, performing sTRP transmission according to the TCI state information that takes effect after the previous indication; or, when the TRP indication field information is indicative of performing sTRP transmission, and if an amount of TCI state information used for uplink/downlink transmission out of the TCI state information that takes effect after the previous indication is at least two pieces, selecting one of the at least two pieces of TCI state information used for uplink/downlink transmission as currently used target TCI state information, and performing sTRP transmission through the target TCI state information.

In some embodiments, in the process of the performing sTRP transmission or mTRP transmission according to the TRP indication field information and the at least one piece of TCI state information in the first message, the processor 63 is further configured to perform the following operations: when the TRP indication field information is indicative of performing mTRP transmission, performing mTRP transmission according to the TCI state information in the first message; or, when the TRP indication field information is indicative of performing sTRP transmission, and if an amount of TCI state information used for uplink/downlink transmission out of the TCI state information included in the first message is one piece, performing sTRP transmission according to the TCI state information in the first message; or, when the TRP indication field information is indicative of performing sTRP transmission, and if an amount of TCI state information used for uplink/downlink transmission out of the TCI state information included in the first message is at least two pieces, selecting one of the at least two pieces of TCI state information used for uplink/downlink transmission as currently used target TCI state information, and performing sTRP transmission through the target TCI state information.

In some embodiments, in a case that the first message is indicative of performing sTRP transmission or mTRP transmission by the terminal according to the TRP indication field information and the at least one piece of TCI state information in the first message, and if a time slot interval between a first time instant and a second time instant is less than or equal to a threshold value, the sTRP transmission or mTRP transmission indicated by the first message is performed according to one or more kinds of the following TCI state information: one or more pieces of TCI state information used by the network device to transmit the first message; one or more pieces of TCI state information in an effective state at the beginning of the sTRP transmission or mTRP transmission indicated by the first message; TCI state information corresponding to a predefined codepoint out of TCI state information whose activation is indicated by the network device; where the first time instant is a time instant when the terminal receives the first message, and the second time instant is a time instant when the terminal receives the sTRP transmission or the mTRP transmission indicated by the first message.

In some embodiments, an amount of the TRP indication field information is at least two pieces, and respective TRP indication field information corresponds to different channels and/or reference signals.

In some embodiments, the processor 63 is further configured to perform the following operations: transmitting, after receiving the first message, a confirmation message for the first message to the network device, where the confirmation message is used to determine an effective time of the TCI state information indicated by the first message.

In some embodiments, the processor 63 is further configured to perform the following operations: transmitting a third message to the network device, where the third message includes transmission capability information of the terminal.

In the above devices, the memory and the processor are directly or indirectly electrically connected to realize data transmission or interaction. For example, these elements may be electrically connected with each other through one or more communication buses or signal lines, for example, they may be connected through a bus. The memory has computer-executable instructions for implementing a data access control method stored therein, including at least one software functional module which may be stored in the memory in the form of software or firmware. The processor executes various functional applications and data processing by running the software programs and modules stored in the memory.

The memory may be, but is not limited to, a random access memory (random access memory, RAM), a read only memory (read only memory, ROM), a programmable read-only memory (programmable read-only memory, PROM), an erasable programmable read-only memory (erasable programmable read-only memory, EPROM), an electrically erasable programmable read-only memory (electrically erasable programmable read-only memory, EEPROM), etc. The memory is configured to store a program, and the processor executes the program after receiving execution instructions. Further, the software programs and modules in the above-mentioned memory may also include an operating system, which may include various software components and/or drivers for managing system tasks (such as memory management, storage device control, power management, etc.), and may communicate with various hardware or software components, thereby providing an operating environment for other software components.

The processor may be an integrated circuit chip with signal processing capability. The processor may be a general processor, including a central processing unit (central processing unit, CPU), a network processor (network processor NP), etc. It may implement or perform the methods, steps and logic blocks disclosed in the embodiments of the present disclosure. The general processor may be a microprocessor or the processor may be any conventional processor, etc.

In some embodiments, a computer-readable storage medium is provided, and computer-executable instructions are stored in the computer-readable storage medium, and the computer-executable instructions, when executed by a processor, are used to implement the steps of various method embodiments of the present disclosure.

In some embodiments, a computer program product is provided, which includes a computer program, and when the computer program is executed by a processor, the steps of various method embodiments of the present disclosure are implemented.

Those skilled in the art can understand that the implementation of all or part of the processes in the above-mentioned method embodiments may be completed by instructing related hardware through a computer program, which may be stored in a nonvolatile computer-readable storage medium, and when executed, the computer program may include the processes of the above-mentioned method embodiments. Any reference to memory, storage, database or other media used in the embodiments provided in the present disclosure may include nonvolatile and/or volatile memory. The nonvolatile memory may include a read-only memory (ROM), a programmable ROM (PROM), an electrically programmable ROM (EPROM), an electrically erasable programmable ROM (EEPROM) or a flash memory. The volatile memory may include a random access memory (RAM) or an external cache memory. By way of illustration and not limitation, RAM is available in various forms, such as a static RAM (SRAM), a dynamic RAM (DRAM), a synchronous DRAM (SDRAM), a double data rate SDRAM (DDRSDRAM), an enhanced SDRAM (ESDRAM), a synchronous link (Synchlink) DRAM (SLDRAM), a rambus direct RAM (RDRAM), and a direct rambus dynamic RAM (DRDRAM), and a rambus dynamic RAM (RDRAM).

Other implementations of the present disclosure will easily occur to those skilled in the art after considering the specification and practicing the application disclosed herein. The present disclosure is intended to cover any variations, uses or adaptations of the present disclosure, which follow the general principles of the present disclosure and include common sense or common technical means in the technical field that are not disclosed in the present disclosure. The specification and embodiments are to be regarded as exemplary only, with a true scope and spirit of the present disclosure indicated by the following claims.

It should be understood that the present disclosure is not limited to the precise structure described above and shown in the drawings, and various modifications and changes can be made without departing from its scope. The scope of the present disclosure is limited only by the appended claims.

## Claims

1. A beam indication method, **characterized in that** the method is applied to a network device and comprises:
acquiring transmission capability information of a terminal;
transmitting a first message to the terminal according to the transmission capability information, wherein the first message comprises at least one piece of transmission configuration indication TCI state information, and the first message is indicative of performing transmission by the terminal according to the TCI state information.

2. The method according to claim 1, further comprising:
transmitting TCI mode information corresponding to the TCI state information to the terminal, wherein the TCI mode information corresponding to the TCI state information is used to indicate that the TCI state information is applied to uplink transmission and/or downlink transmission, and the TCI mode information corresponding to the TCI state information is transmitted by being comprised in the first message or transmitted independently of the first message;
wherein the TCI mode information comprises a first TCI mode and/or a second TCI mode, and in the first TCI mode, the TCI state information used for uplink transmission is the same as the TCI state information used for downlink transmission; and in the second TCI mode, the TCI state information used for uplink transmission is different from the TCI state information used for downlink transmission.

3. The method according to claim 2, wherein the TCI mode information corresponding to the TCI state information being transmitted independently of the first message comprises:
transmitting the TCI mode information corresponding to the TCI state information to the terminal by using one piece of signaling or using at least two pieces of signaling;
wherein each of the at least two pieces of signaling is associated with a control resource set CORESET or a CORESET group, and the CORESET group comprises CORESETs with a same identifier.

4. The method according to claim 3, wherein the transmitting the TCI mode information corresponding to the TCI state information to the terminal by using one piece of signaling or at least two pieces of signaling comprises:
transmitting one second message or at least two second messages to the terminal;
wherein the second message comprises one or more TCI state fields and TCI mode information corresponding to each of the TCI state fields, or
the second message comprises one or more TCI state fields, and each of the TCI state fields in the second message is preset to correspond to one kind of TCI mode information.

5. The method according to claim 2, wherein the TCI mode information corresponding to the TCI state information being transmitted by being comprised in the first message comprises:
the first message comprises a TCI mode information field, and the TCI mode information field is used to indicate the TCI mode information; or
the first message comprises a TCI field, and some bits in the TCI field are used to indicate the TCI mode information.

6. The method according to any one of claims 1 to 5, wherein the first message being indicative of performing transmission by the terminal according to the TCI state information comprises:
the first message is indicative of performing single transmission reception point sTRP transmission or multi-transmission reception point mTRP transmission by the terminal according to the at least one piece of TCI state information, and the at least one piece of TCI state information is indicative of performing uplink transmission and/or downlink transmission.

7. The method according to claim 6, wherein the first message being indicative of performing single transmission reception point sTRP transmission or multi-transmission reception point mTRP transmission by the terminal according to the at least one piece of TCI state information comprises:
when an amount of TCI state information used for uplink/downlink transmission out of the TCI state information comprised in the first message is one piece, the first message is indicative of performing sTRP transmission or mTRP transmission by the terminal according to TCI state information that takes effect after a previous indication, and performing a next sTRP transmission by the terminal according to the TCI state information in the first message after the TCI state information in the first message takes effect; or
when an amount of TCI state information used for uplink/downlink transmission out of the TCI state information comprised in the first message is at least two pieces, the first message is indicative of performing mTRP transmission by the terminal according to the TCI state information in the first message.

8. The method according to claim 7, wherein the first message being indicative of performing sTRP transmission or mTRP transmission by the terminal according to TCI state information that takes effect after a previous indication comprises:
if an amount of TCI state information used for uplink/downlink transmission out of the TCI state information that takes effect after the previous indication is one piece, the first message is indicative of performing sTRP transmission by the terminal according to the TCI state information that takes effect after the previous indication;
if an amount of TCI state information used for uplink/downlink transmission out of the TCI state information that takes effect after the previous indication is at least two pieces, the first message is indicative of performing mTRP transmission by the terminal according to the TCI state information that takes effect after the previous indication.

9. The method according to any one of claims 1 to 5, further comprising:
transmitting TRP indication field information to the terminal, wherein the TRP indication field information is indicative of performing sTRP transmission or mTRP transmission, and the TRP indication field information is transmitted by being comprised in the first message or transmitted independently of the first message; wherein the first message is indicative of performing sTRP transmission or mTRP transmission by the terminal according to the TRP indication field information and the at least one piece of TCI state information.

10. The method according to claim 9, wherein the first message being indicative of performing sTRP transmission or mTRP transmission by the terminal according to the TRP indication field information and the at least one piece of TCI state information comprises:
the first message is indicative of performing sTRP transmission or mTRP transmission by the terminal according to the TRP indication field information and TCI state information that takes effect after a previous indication, and performing a next sTRP transmission or a next mTRP transmission by the terminal according to the TCI state information in the first message after the TCI state information in the first message takes effect; or
the first message is indicative of performing sTRP transmission or mTRP transmission by the terminal according to the TRP indication field information and the at least one piece of TCI state information in the first message.

11. The method according to claim 10, wherein the first message being indicative of performing sTRP transmission or mTRP transmission by the terminal according to the TRP indication field information and TCI state information that takes effect after a previous indication comprises:
when the TRP indication field information is indicative of performing mTRP transmission, and if an amount of TCI state information used for uplink/downlink transmission out of the TCI state information that takes effect after the previous indication is one piece, the first message is indicative of performing sTRP transmission by the terminal according to the TCI state information that takes effect after the previous indication; or
when the TRP indication field information is indicative of performing mTRP transmission, and if an amount of TCI state information used for uplink/downlink transmission out of the TCI state information that takes effect after the previous indication is at least two pieces, the first message is indicative of performing mTRP transmission by the terminal according to the TCI state information that takes effect after the previous indication; or
when the TRP indication field information is indicative of performing sTRP transmission, and if an amount of TCI state information used for uplink/downlink transmission out of the TCI state information that takes effect after the previous indication is one piece, the first message is indicative of performing sTRP transmission by the terminal according to the TCI state information that takes effect after the previous indication; or
when the TRP indication field information is indicative of performing sTRP transmission, and if an amount of TCI state information used for uplink/downlink transmission out of the TCI state information that takes effect after the previous indication is at least two pieces, the TRP indication field information is further indicative of selecting one of the at least two pieces of TCI state information used for uplink/downlink transmission as currently used target TCI state information by the terminal, and performing sTRP transmission by the terminal through the target TCI state information.

12. The method according to claim 10, wherein the first message being indicative of performing sTRP transmission or mTRP transmission by the terminal according to the TRP indication field information and the at least one piece of TCI state information in the first message comprises:
when the TRP indication field information is indicative of performing mTRP transmission, the first message is indicative of performing mTRP transmission by the terminal according to the TCI state information in the first message; or
when the TRP indication field information is indicative of performing sTRP transmission, and if an amount of TCI state information used for uplink/downlink transmission out of the TCI state information comprised in the first message is one piece, the first message is indicative of performing sTRP transmission by the terminal according to the TCI state information in the first message; or
when the TRP indication field information is indicative of performing sTRP transmission, and if an amount of TCI state information used for uplink/downlink transmission out of the TCI state information comprised in the first message is at least two pieces, the TRP indication field information is further indicative of selecting one of the at least two pieces of TCI state information used for uplink/downlink transmission as currently used target TCI state information by the terminal, and performing sTRP transmission by the terminal through the target TCI state information.

13. The method according to claim 10, wherein in a case that the first message is indicative of performing sTRP transmission or mTRP transmission by the terminal according to the TRP indication field information and the at least one piece of TCI state information in the first message, and if a time slot interval between a first time instant and a second time instant is less than or equal to a threshold value, the sTRP transmission or mTRP transmission indicated by the first message is performed according to one or more kinds of the following TCI state information:
one or more pieces of TCI state information used by the network device to transmit the first message;
one or more pieces of TCI state information in an effective state at the beginning of the sTRP transmission or mTRP transmission indicated by the first message;
TCI state information corresponding to a predefined codepoint out of TCI state information whose activation is indicated by the network device;
wherein the first time instant is a time instant when the terminal receives the first message, and the second time instant is a time instant when the terminal receives the sTRP transmission or the mTRP transmission indicated by the first message.

14. The method according to claim 9, wherein an amount of the TRP indication field information is at least two pieces, and respective TRP indication field information corresponds to different channels and/or reference signals.

15. The method according to any one of claims 10 to 13, further comprising:
receiving a confirmation message for the first message, wherein the confirmation message is transmitted by the terminal after receiving the first message, and the confirmation message is used to determine an effective time of the TCI state information indicated by the first message.

16. The method according to any one of claims 1 to 5, wherein the acquiring transmission capability information of the terminal comprises:
receiving a third message transmitted by the terminal, wherein the third message comprises the transmission capability information.

17. A beam indication method, **characterized in that** the method is applied to a terminal and comprises:
receiving a first message from a network device, wherein the first message comprises at least one piece of transmission configuration indication TCI state information, and the first message is transmitted by the network device according to transmission capacity information of the terminal; and
performing transmission according to the TCI state information.

18. The method according to claim 17, further comprising:
acquiring, from the first message, TCI mode information corresponding to the TCI state information, or receiving TCI mode information corresponding to the TCI state information and transmitted by the network device independently of the first message, wherein the TCI mode information corresponding to the TCI state information is used to indicate that the TCI state information is applied to uplink transmission and/or downlink transmission;
wherein the TCI mode information comprises a first TCI mode and/or a second TCI mode, and in the first TCI mode, the TCI state information used for uplink transmission is the same as the TCI state information used for downlink transmission; and in the second TCI mode, the TCI state information used for uplink transmission is different from the TCI state information used for downlink transmission.

19. The method according to claim 18, wherein the receiving, from the network device, TCI mode information corresponding to the TCI state information comprises:
receiving the TCI mode information corresponding to the TCI state information and transmitted by the network device using one piece of signaling or using at least two pieces of signaling;
wherein each of the at least two pieces of signaling is associated with a control resource set CORESET or a CORESET group, and the CORESET group comprises CORESETs with a same identifier.

20. The method according to claim 19, wherein the receiving the TCI mode information corresponding to the TCI state information and transmitted by the network device using one piece of signaling or using at least two pieces of signaling comprises:
receiving one second message or at least two second messages transmitted by the network device;
wherein the second message comprises one or more TCI state fields and TCI mode information corresponding to each of the TCI state fields, or
the second message comprises one or more TCI state fields, and each of the TCI state fields in the second message is preset to correspond to one kind of TCI mode information.

21. The method according to claim 18, wherein the first message comprises a TCI mode information field, and the TCI mode information field is used to indicate the TCI mode information; or, the first message comprises a TCI field, and some bits in the TCI field are used to indicate the TCI mode information.

22. The method according to any one of claims 17 to 21, wherein the performing transmission according to the TCI state information comprises:
performing, according to the at least one piece of TCI state information, single transmission reception point sTRP transmission or multi-transmission reception point mTRP transmission, wherein the at least one piece of TCI state information is indicative of performing uplink transmission and/or downlink transmission.

23. The method according to claim 22, wherein the performing, according to the at least one piece of TCI state information, single transmission reception point sTRP transmission or multi-transmission reception point mTRP transmission comprises:
when an amount of TCI state information used for uplink/downlink transmission out of the TCI state information comprised in the first message is one piece, performing sTRP transmission or mTRP transmission according to TCI state information that takes effect after a previous indication, and performing a next sTRP transmission according to the TCI state information in the first message after the TCI state information in the first message takes effect; or
when an amount of TCI state information used for uplink/downlink transmission out of the TCI state information comprised in the first message is at least two pieces, performing mTRP transmission according to the TCI state information in the first message.

24. The method according to claim 23, wherein the performing sTRP transmission or mTRP transmission according to TCI state information that takes effect after a previous indication comprises:
if an amount of TCI state information used for uplink/downlink transmission out of the TCI state information that takes effect after the previous indication is one piece, performing sTRP transmission according to the TCI state information that takes effect after the previous indication;
if an amount of TCI state information used for uplink/downlink transmission out of the TCI state information that takes effect after the previous indication is at least two pieces, performing mTRP transmission according to the TCI state information that takes effect after the previous indication.

25. The method according to any one of claims 17 to 21, further comprising:
acquiring TRP indication field information from the first message, or receiving TRP indication field information transmitted by the network device independently of the first message, wherein the TRP indication field information is indicative of performing sTRP transmission or mTRP transmission;
the performing transmission according to the TCI state information comprises:
performing sTRP transmission or mTRP transmission according to the TRP indication field information and the at least one piece of TCI state information.

26. The method according to claim 25, wherein the performing sTRP transmission or mTRP transmission according to the TRP indication field information and the at least one piece of TCI state information comprises:
performing sTRP transmission or mTRP transmission according to the TRP indication field information and TCI state information that takes effect after a previous indication, and performing a next sTRP transmission or mTRP transmission according to the TCI state information in the first message after the TCI state information in the first message takes effect; or
performing sTRP transmission or mTRP transmission according to the TRP indication field information and the at least one piece of TCI state information in the first message.

27. The method according to claim 26, wherein the performing sTRP transmission or mTRP transmission according to the TRP indication field information and TCI state information that takes effect after a previous indication comprises:
when the TRP indication field information is indicative of performing mTRP transmission, and if an amount of TCI state information used for uplink/downlink transmission out of the TCI state information that takes effect after the previous indication is one piece, performing sTRP transmission according to the TCI state information that takes effect after the previous indication; or
when the TRP indication field information is indicative of performing mTRP transmission, and if an amount of TCI state information used for uplink/downlink transmission out of the TCI state information that takes effect after the previous indication is at least two pieces, performing mTRP transmission according to the TCI state information that takes effect after the previous indication; or
when the TRP indication field information is indicative of performing sTRP transmission, and if an amount of TCI state information used for uplink/downlink transmission out of the TCI state information that takes effect after the previous indication is one piece, performing sTRP transmission according to the TCI state information that takes effect after the previous indication; or
when the TRP indication field information is indicative of performing sTRP transmission, and if an amount of TCI state information used for uplink/downlink transmission out of the TCI state information that takes effect after the previous indication is at least two pieces, selecting one of the at least two pieces of TCI state information used for uplink/downlink transmission as currently used target TCI state information, and performing sTRP transmission through the target TCI state information.

28. The method according to claim 27, wherein the performing sTRP transmission or mTRP transmission according to the TRP indication field information and the at least one piece of TCI state information in the first message comprises:
when the TRP indication field information is indicative of performing mTRP transmission, performing mTRP transmission according to the TCI state information in the first message; or
when the TRP indication field information is indicative of performing sTRP transmission, and if an amount of TCI state information used for uplink/downlink transmission out of the TCI state information comprised in the first message is one piece, performing sTRP transmission according to the TCI state information in the first message; or
when the TRP indication field information is indicative of performing sTRP transmission, and if an amount of TCI state information used for uplink/downlink transmission out of the TCI state information comprised in the first message is at least two pieces, selecting one of the at least two pieces of TCI state information used for uplink/downlink transmission as currently used target TCI state information, and performing sTRP transmission through the target TCI state information.

29. The method according to claim 27, wherein in a case that the first message is indicative of performing sTRP transmission or mTRP transmission by the terminal according to the TRP indication field information and the at least one piece of TCI state information in the first message, and if a time slot interval between a first time instant and a second time instant is less than or equal to a threshold value, the sTRP transmission or mTRP transmission indicated by the first message is performed according to one or more kinds of the following TCI state information:
one or more pieces of TCI state information used by the network device to transmit the first message;
one or more pieces of TCI state information in an effective state at the beginning of the sTRP transmission or mTRP transmission indicated by the first message;
TCI state information corresponding to a predefined codepoint out of TCI state information whose activation is indicated by the network device;
wherein the first time instant is a time instant when the terminal receives the first message, and the second time instant is a time instant when the terminal receives the sTRP transmission or the mTRP transmission indicated by the first message.

30. The method according to claim 25, wherein an amount of the TRP indication field information is at least two pieces, and respective TRP indication field information corresponds to different channels and/or reference signals.

31. The method according to any one of claims 17 to 21, further comprising:
transmitting, after receiving the first message, a confirmation message for the first message to the network device, wherein the confirmation message is used to determine an effective time of the TCI state information indicated by the first message.

32. The method according to any one of claims 17 to 21, further comprising:
transmitting a third message to the network device, wherein the third message comprises transmission capability information of the terminal.

33. A beam indication apparatus, **characterized in that** the apparatus is applied to a network device and comprises:
an acquiring module, configured to acquire transmission capability information of a terminal; and
a transmitting module, configured to transmit a first message to the terminal according to the transmission capability information, wherein the first message comprises at least one piece of transmission configuration indication TCI state information, and the first message is indicative of performing transmission by the terminal according to the TCI state information.

34. A beam indication apparatus, **characterized in that** the apparatus is applied to a terminal and comprises:
a receiving module, configured to receive a first message from a network device, wherein the first message comprises at least one piece of transmission configuration indication TCI state information, and the first message is transmitted by the network device according to transmission capacity information of the terminal; and
a transmission module, configured to perform transmission according to the TCI state information.

35. A network device, **characterized by** comprising a memory, a transceiver and a processor; wherein the memory is configured to store a computer program, the transceiver is configured to transmit and receive data under control of the processor, and the processor is configured to read the computer program in the memory and perform the following operations:
acquiring transmission capability information of a terminal; and
transmitting a first message to the terminal according to the transmission capability information, wherein the first message comprises at least one piece of transmission configuration indication TCI state information, and the first message is indicative of performing transmission by the terminal according to the TCI state information.

36. A terminal, **characterized by** comprising a memory, a transceiver and a processor; wherein the memory is configured to store a computer program, the transceiver is configured to transmit and receive data under control of the processor, and the processor is configured to read the computer program in the memory and perform the following operations:
receiving a first message from a network device, wherein the first message comprises at least one piece of transmission configuration indication TCI state information, and the first message is transmitted by the network device according to transmission capability information of the terminal; and
performing transmission according to the TCI state information.

37. A computer-readable storage medium, **characterized in that** the computer-readable storage medium has computer-executable instructions stored thereon, and the computer-executable instructions, when executed by a processor, are used to implement the beam indication method according to any one of claims 1 to 32.
